# FASCICULE DE BREVET EUROPEEN

(11) **EP 2 648 102 B1**
(45) Date de publication et mention de la délivrance du brevet: **25.05.2016**
(21) Numéro de dépôt: 13162611.1
(22) Date de dépôt: 05.04.2013
(51) Int. Cl.: G06F 11/18, G01S 19/45, G01S 19/47

(54) **Dispositif pour la détermination d'informations de localisation et de références primaires inertielles pour un aéronef**
Vorrichtung zur Bestimmung der Lokalisierungsinformationen und der primären Trägheitsreferenzwerte für ein Luftfahrzeug
Device for determining location information and inertial primary references for an aircraft

(30) Priorité: 06.04.2012 FR 1201034
(43) Date de publication de la demande: 09.10.2013
(73) Titulaire: Thales, 92200 Neuilly Sur Seine (FR)
(72) Inventeur: Arethens, Jean-Pierre, 26760 Beaumont les Valence (FR); Bouard, Dominique, 26027 Valence Cedex (FR)
(74) Mandataire: Brunelli, Gérald

(56) Documents cités:
- EP-A1- 1 326 153
- FR-A1- 2 901 363
- US-A1- 2008 147 255
- US-A1- 2008 319 591
- US-A1- 2011 071 710
- US-A1- 2011 084 874
- US-A1- 2011 181 863
- US-B1- 6 205 376
- US-B2- 7 715 955

## Description

L'invention concerne un dispositif pour la détermination d'informations de localisation et de références primaires inertielles pour un aéronef.

Pour garantir le haut niveau de disponibilité et d'intégrité des informations de localisation et de références primaires inertielles et de données anémo-barométriques (ou air data), nécessaires au pilotage et contrôle d'un aéronef commercial dans toutes les phases de vol, les aéronefs existants possèdent une pluralité de moyens de mesures, mettant en oeuvre des principes et technologies différentes.

Des vérifications de la cohérence des informations fournies par les différents moyens de mesure sont nécessaires pour contrôler l'intégrité des données.

Ces vérifications sont effectuées par les systèmes utilisateurs (par exemple le système de gestion du vol) en fonction de leurs différents besoins en termes d'intégrité.

On connait notamment la demande de brevet publiée sous la référence FR 2901363 présentant un dispositif de navigation aérienne utilisant des capteurs inertiels et des récepteurs de radionavigation, ainsi que la demande de brevet US 2011/0094974 présentant un système de calcul de position d'un aéronef et de détermination de l'intégrité de la position calculée.

Les systèmes utilisateurs sont des systèmes qui utilisent entre autre des données inertielles ou air data. Parmi les systèmes utilisateurs les plus critiques, il y a le système d'affichage (pilotage manuel et monitoring du pilotage automatique), pilote automatique (PA) et les commandes de vol (Flight Control System). Il existe également le système de gestion des alarmes (connu sous le nom anglais de Flight Warning system), la gestion des moteurs, le système de gestion du freinage, le système de surveillance (radar météo, anticollision sol, anticollision avion), les enregistreurs de vol et d'autres systèmes encore plus éloignés fonctionnellement( comme le conditionnement d'air, le système vidéo en cabine passager, etc..

Ceci implique que certains systèmes utilisent des informations jugées inutilisables par d'autres systèmes. Par conséquent, cela peut conduire à des situations préjudiciables à la sécurité des vols, en cas de défaillance détectée ou non, d'un ou plusieurs moyens de mesures.

L'invention vise à pallier les problèmes cités précédemment en proposant un dispositif permettant la fourniture de paramètres consolidés cohérents de localisation et référence primaires uniques, possédant un haut niveau de disponibilité et d'intégrité, utilisables par tous les systèmes d'un aéronef.

A cet effet, l'invention a pour objet un dispositif (100) pour la détermination d'informations de localisation, de références primaires inertielles et de données anémo-barométriques consolidées pour un aéronef, caractérisé en ce qu'il comporte :
- une chaine (110) de détermination des informations de localisation comprenant :
   o des moyens (111) de mesure de données de radionavigation,
   o des moyens adaptés (112) pour la consolidation des données de radionavigation mesurées,
   o des moyens adaptés (113) pour le calcul de paramètres de position de l'aéronef à partir des données de radionavigation consolidées,
   o des moyens adaptés (114) pour la consolidation des paramètres de position calculés,
- une chaine (120) de détermination des références primaires inertielles comprenant :
   o des moyens (121) pour la mesure de données inertielles indiquant le mouvement de l'aéronef par rapport à un référentiel terrestres,
   o des moyens adaptés (122) pour la consolidation des données inertielles mesurées,
   o des moyens adaptés (123) pour le calcul de paramètres de référence inertiels de l'aéronef à partir des données inertielles consolidées,
   o des moyens adaptés (124) pour la consolidation des paramètres de référence inertielle calculés,
- une chaine (130) de détermination de données anémo-barométriques comprenant :
   o des moyens (131) pour la mesure de données anémo-barométriques indiquant mouvement de l'aéronef par rapport à l'air,
   o des moyens adaptés (132) pour la consolidation des données anémo-barométriques mesurées,
   o des moyens adaptés (133) pour le calcul de paramètres de référence anémo-barométriques de l'aéronef des données anémo-barométriques consolidées,
   o des moyens adaptés (134) pour la consolidation des paramètres de référence anémométrique calculés.

De plus les moyens adaptés (112, 122,132) pour la consolidation des données comportent une pluralité de chaines de consolidation (201, 202, 203, 204), chacune des chaines de consolidation (201) étant associée à un indice et comportant :
- un moyen de calcul (Q1), relié à l'ensemble desdits moyens de mesures de la chaine de détermination à laquelle les moyens adaptés pour la consolidation des données appartiennent, ledit moyen de calcul comparant les mesures desdits moyens de mesures et permettant la détection des moyens de mesures défaillants,
- un moyen de stockage ordonné des résultats du calcul des moyens de calcul (Q2,Q3,Q4) des autres chaines de consolidation (202,203,204), classant les résultats par ordre croissant des indices associés aux chaines de consolidation (de i+1 à n, et de 1 à i-1) et supprimant les résultats des calcules des chaines de consolidation dont les moyens de mesures sont défaillants,
- un premier moyen de comparaison (C1), effectuant une comparaison entre le résultat d'un moyen de calcul (Q1) et le premier résultat du moyen de stockage ordonné des résultats de calcul des autres moyens de calcul (Q2,Q3,Q4) et permettant la détection des moyens de calculs défaillants.
- un moyen de stockage ordonné des résultats des comparateurs (C2,C3,C4) ordonnant les résultats des comparateurs par ordre décroissant des indices associés aux chaines de consolidation (de i-1 à 1, et de n à i+1) et supprimant les résultats des premières comparaisons des chaines de consolidations dont les moyens de calculs sont défaillants,
- un deuxième moyen de comparaison (S1), permettant de comparer le résultat d'un premier moyen de comparaison (C1) avec le résultat d'un des autres premier moyen de comparaison (C2,C3,C4), permettant la détection des premiers moyens de comparaison défaillants et permettant l'arrêt des chaines de consolidation dont les premiers moyens de comparaison sont défaillants.

L'invention a pour avantage de fournir des paramètres consolidés de localisation et référence primaires inertielles uniques, utilisables par tous les systèmes d'un aéronef.

Les moyens adaptés (122) pour la consolidation des données (112, 122,132) et les moyens adaptés pour la consolidation des paramètres de référence (114, 124,134) permettent de garantir un haut niveau de d'intégrité des données compatibles avec les différents systèmes embarqués utilisant ces données.

Avantageusement le dispositif, comprend en outre des moyens adaptés pour l'hybridation (140) des données inertielles et des signaux de radionavigation.

Avantageusement le dispositif comprend en outre des moyens adaptés pour l'hybridation (150) des données inertielles et des données anémo-barométriques.

Avantageusement les moyens (111) de mesure de données radionavigation comportent deux premiers sous moyens (MCR1,MCR2) et deux deuxièmes sous moyens différents (GBAS_GPS_1, GBAS_GPS_2) reliés chacun à deux antennes (AGN1,AGN2) fournissant des mesures synchrones sur les signaux de radionavigation (GNSS_Rd1, GNSS_Rd2, GPS_Rd1, GPS_Rd2) et des messages de navigations, les moyens adaptés (112) pour la consolidation des données de radionavigation mesurées comportent quatre troisièmes sous moyens (consolidate_GNSS_1, consolidate-GNSS_2, consolidate-GNSS-3, consolidate_GNSS_4) permettant la consolidation des mesures sur les signaux de radionavigation (GNSS_Rd1, GNSS_Rd2, GPS_Rd1, GPS_RD2), et les moyens adaptés (113) pour le calcul de paramètres de position de l'aéronef et les moyens adaptés (114) pour la consolidation des paramètres de position calculés comportent deux quatrièmes sous moyens (fusion_POS3D1, fusion_POS3D2) permettant le calcul de positions de l'aéronef à partir de mesures de données inertielles consolidées (C_INS1, C_INS2) et mesure de signaux radionavigation consolidées (C_GNSS1, C_GNSS2). De plus le dispositif comporte également deux cinquièmes sous moyens (PAN_SW1, PAN_SW2) permettant l'activation, pour une approche donnée, d'un moyen d'approche sélectionné par le pilote, et permettant le calcul de déviations par rapport à une trajectoire d'approche de référence prédéterminée ; et deux sixièmes sous moyens (PAN_SW1_mon, PAN_SW2_mon) permettant la consolidation des calculs des déviations.

Avantageusement les moyens (111) de mesure de données radionavigation comportent trois septièmes sous moyens (MCR1,MCR2,MCR3) reliés chacun à trois antennes (AGN1, AGN2, AGN3) fournissant des mesures synchrones sur des signaux de radionavigation (GNSS_Rd1, GNSS_Rd2, GNSS_RD3) et des messages de navigations, les moyens adaptés (112) pour la consolidation des données de radionavigation mesurées comportent trois huitièmes sous moyens (consolidate_GNSS_1, consolidate_GNSS_2, consolidate_GNSS_3) pour la consolidation des mesures sur les signaux de radionavigation (GNSS_Rd1, GNSS_Rd2, GNSS_RD3) et les moyens adaptés (113) pour le calcul de paramètres de position de l'aéronef et les moyens adaptés (114) pour la consolidation des paramètres de position calculés comportent deux neuvièmes sous moyens (fusion_POS3D1, fusion_POS3D2, fusion_POS3D3) pour le calcul de positions de l'aéronef à partir de mesures de données inertielles consolidées (C_INS1, C_INS2, C_INS3) et mesure de signaux radionavigation consolidées (C_GNSS1, C_GNSS2, C_GNSS3). De plus le dispositif comporte également trois dixièmes sous moyens (manage GLS_SW1, Manage_GLS_SW2 et Manage_GLS_SW3) pour l'activation, pour une approche donnée, d'un moyen d'approche sélectionné par le pilote, pour le calcul et la consolidation de déviations par rapport à une trajectoire d'approche de référence prédéterminée.

Avantageusement un équipement de radio navigation (RAD-NAV) permettant l'émission/réception d'onde radio respectant l'ensemble des normes utilisées dans les applications de radio navigation

Avantageusement le dispositif comporte deux moyens de détection des mouvements et des accélérations, un récepteur dual de localisation par satellite, et des moyens de détermination de la localisation à partir des signaux reçus dudit récepteur dual.

Avantageusement le dispositif comporte trois moyens de détection des mouvements et des accélérations, un récepteur dual de localisation par satellite, et des moyens de détermination de la localisation à partir des signaux reçus dudit récepteur dual.

Avantageusement le dispositif comporte au moins un premier récepteur comportant une antenne et des moyens de traitement analogiques et numériques des signaux provenant de l'antenne.

Avantageusement le premier récepteur est choisi parmi :
- un deuxième récepteur de signaux de localisation utilisant la norme VOR/DL comportant un sous moyen de réception d'un signal dans la bande de fréquence VHF, un sous moyen d'échantillonnage dudit signal reçu dans la bande de fréquence VHF et un sous module de détermination d'une distance entre une balise d'émission réception VOR et ledit récepteur de signaux à partir dudit signal échantillonné ;
- un troisième récepteur de signaux de localisation par satellite comportant des sous moyens (MCR1, MCR2, MCR3) reliés chacun à trois antennes (AGN1, AGN2, AGN3) fournissant des mesures synchrones sur des signaux de radionavigation (GNSS_Rd1, GNSS_Rd2, GNSS_RD3) et des messages de navigations,
- un quatrième récepteur de signaux de distance utilisant la norme DME comportant un sous dispositif fournissant des distances suivant la norme DME;
- un premier dispositif d'aide à l'atterrissage utilisant la norme ILS comportant une chaîne de traitement numérique des signaux reçus dans les bandes VHF et UHF et fournissant des écarts de localisation;
- un deuxième dispositif d'aide à l'atterrissage utilisant la norme ILS comportant une chaîne de traitement numérique des signaux reçus dans les bandes VHF et UHF et fournissant des écarts par rapport à la pente d'atterrissage.

Avantageusement les moyens pour la mesure de données inertielles comportent au moins deux onzièmes sous-moyens (UMI-A1, UMI-A2) et au moins deux douzièmes sous-moyens différents (UMI-C1, UMI-C2) fournissant des mesures inertielles brutes d'accélérations et de vitesses angulaires (INS-X RD, Raw Data). De plus les moyens adaptés pour la consolidation des données inertielles mesurées comportent au moins trois treizièmes sous-moyens de consolidation (Consol-IRS1, Consol-IRS2, Consol-IRS3) desdites mesures inertielles brutes d'accélérations et de vitesses angulaires. Les moyens adaptés pour le calcul de paramètres de référence inertiels comportent au moins deux quatorzièmes sous-moyens (PFV-A1, PFV-A2) traitant lesdites données mesurées par les au moins deux onzièmes sous-moyens et au moins deux quinzièmes sous-moyens (PFV-C1, PFV-C2) traitant lesdites données mesurées par les au moins deux douzièmes sous-moyens différentes (UMI-C1, UMI-C2). Enfin les moyens adaptés pour la consolidation des paramètres de référence inertielle calculés, comportent au moins trois seizièmes sous-moyens de consolidation (Consol PFV1, Consol PFV2, Consol PFV3) desdites données provenant des au moins deux quatorzièmes sous-moyens (PFV-A1, PFV-A2) et des au moins deux quinzièmes sous-moyens (PFV-C1, PFV-C2).

Avantageusement. les moyens pour la mesure de données anémo-barométriques comportent des sous moyens de mesure de la pression totale (Pt) et/ou des sous moyens de mesure de la pression statique (Ps) et/ou des sous moyens de mesure de l'angle d'incidence air (AOA) et/ou des sous moyens de mesure de l'angle de dérapage air (SSA) et/ou des sous moyens de mesure de la vitesse air. De plus les moyens adaptés pour la consolidation des données anémobarométriques mesurées comportent des dix-septième sous-moyens de calcul des paramètres anémobarométriques (ADC). Egalement les moyens adaptés pour le calcul de paramètres de référence anémobarométriques de l'aéronef des données anémobarométriques consolidées comportent des dix-huitièmes sous-moyens de calcul des paramètres anémobarométriques (ADC). Enfin les moyens adaptés pour la consolidation des paramètres de référence anémométrique calculés comprennent trois dix-neuvièmes sous-moyens (Consol AD) consolidant les données issues desdits dix-huitièmes et dix-neuvièmes sous moyens (ADC) et sont également adaptés pour utiliser des données provenant d'autres systèmes (Aiding systems).

L'invention sera mieux comprise et d'autres avantages apparaîtront à la lecture de la description détaillée faite à titre d'exemple non limitatif et à l'aide des figures parmi lesquelles :
La figure 1 présente un schéma fonctionnel du dispositif pour la détermination d'informations de localisation selon l'invention.
La figure 2 représente quatre chaines de consolidation reliées chacune à une pluralité de senseurs.
La figure 3 représente une première variante d'une architecture logique du dispositif selon l'invention.
La figure 4 représente une deuxième variante d'une architecture logique du dispositif selon l'invention.
La figure 5 représente une première variante d'une architecture logique du dispositif selon l'invention.
La figure 6 représente une deuxième variante d'une architecture logique du dispositif selon l'invention.
La figure 7 représente une troisième variante d'une architecture logique du dispositif selon l'invention.
La figure 8 représente une première variante d'une architecture matérielle du dispositif selon l'invention.
La figure 9 représente une deuxième variante d'une architecture matérielle du dispositif selon l'invention.
La figure 10 représente une troisième variante d'une architecture matérielle du dispositif selon l'invention.
La figure 11 représente une première variante d'une architecture matérielle dans laquelle les composants sont implémentés classiquement du dispositif selon l'invention.
La figure 12 représente une deuxième variante d'une architecture matérielle dans laquelle les composants sont implémentés classiquement du dispositif selon l'invention.
La figure 13 représente une troisième variante d'une architecture matérielle dans laquelle les composants sont implémentés classiquement du dispositif selon l'invention.
La figure 14 représente une quatrième variante d'une architecture matérielle dans laquelle les composants sont implémentés classiquement du dispositif selon l'invention
La figure 15 représente une cinquième variante d'une architecture matérielle dans laquelle les composants sont implémentés classiquement du dispositif selon l'invention
La figure 16 représente une sixième variante d'une architecture matérielle dans laquelle les composants sont implémentés classiquement du dispositif selon l'invention

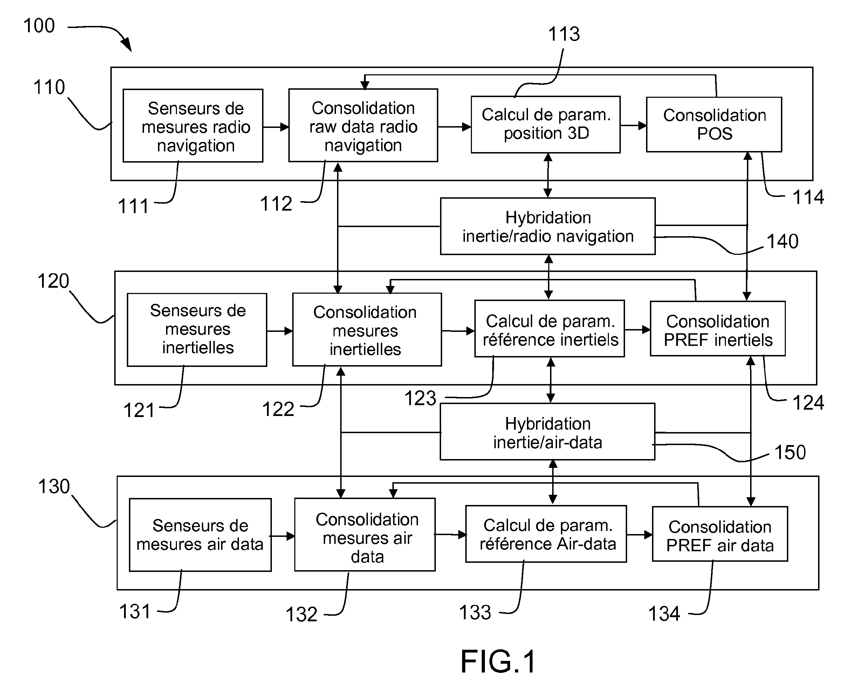

La figure 1 présente un schéma fonctionnel du dispositif pour la détermination d'informations de localisation selon l'invention. Le dispositif permet la détermination d'informations de localisation, de références primaires inertielles et de données anémo-barométriques consolidées pour un aéronef. Ce dispositif comporte :
- une chaine 110 de détermination des informations de localisation comprenant :
   o des moyens 111 de mesure de données de radionavigation,
   o des moyens adaptés 112 pour la consolidation des données de radionavigation mesurées,
   o des moyens adaptés 113 pour le calcul de paramètres de position de l'aéronef,
   o des moyens adaptés 114 pour la consolidation des paramètres de position calculés,
- une chaine 120 de détermination des références primaires inertielles comprenant :
   o des moyens 121 pour la mesure de données inertielles indiquant le mouvement de l'aéronef par rapport à un référentiel terrestres,
   o des moyens adaptés 122 pour la consolidation des données inertielles mesurées,
   o des moyens adaptés 123 pour le calcul de paramètres de référence inertiels de l'aéronef,
   o des moyens adaptés 124 pour la consolidation des paramètres de référence inertielle calculés,
- une chaine 130 de détermination de données anémo-barométriques comprenant :
   o des moyens 131 pour la mesure de données anémo-barométriques indiquant mouvement de l'aéronef par rapport à l'air,
   o des moyens adaptés 132 pour la consolidation des données anémo-barométriques mesurées,
   o des moyens adaptés 133 pour le calcul de paramètres de référence anémo-barométriques de l'aéronef,
   o des moyens adaptés 134 pour la consolidation des paramètres de référence anémométrique calculés.

Les principes utilisés pour la consolidation amont des mesures issues des différents senseurs mettent en oeuvre un ensemble de tests statistiques issus de la comparaison entre des mesures attendues et des mesures effectuées. Les mesures des différents senseurs d'un même type ne sont en général pas synchrones entre eux, et ne sont pas physiquement co-localisées.

On corrige les mesures des « défauts » d'installation et de synchronisation pour les ramener fictivement au même point, et au même instant. En particulier on considère que les mesures fournies par des senseurs d'un même type sont faites à des instants suffisamment proches pour qu'il n'y ait pas besoin d'extrapoler les signaux pour pouvoir les comparer, ou qu'elles sont datées par un signal d'horloge commun qui permet de resynchroniser les données les unes par rapport aux autres.

Pour effectuer les tests, on considère qu'à court terme les mesures sont uniquement affectés de bruit de mesure qui dépendent des performances des capteurs de mesures, et on cherche à détecter un défaut de type biais anormal sur ces mesures. Pour un système à « n » senseurs, on va donc détecter un comportement anormal d'un senseur en vérifiant que les écarts entre les mesures de chaque senseur à la moyenne pondérées des (n-1) senseurs différents est compatible avec les caractéristiques statistique du bruit court terme attendu sur la mesure.

Cette comparaison peut utiliser un ensemble de valeurs filtrées avec des temps de filtrage compatible avec des temps d'alerte de détection de panne autorisés. Dès lors qu'une seule des valeurs s'écartent significativement des autres, on détecte qu'on est en présence d'une anomalie est la mesure du senseur considéré est rejetée. Les valeurs de tests statistiques pour décider du rejet sont fixées pour garantir la continuité de fonctionnement du système. Ils peuvent être continûment adaptés pour tenir compte de conditions extérieures telles que la dynamique.

La consolidation aval a pour but de vérifier que la consolidation amont et les différents traitements effectués après la consolidation amont ne sont pas erronés suite à une panne non détectée des calculateurs qui réalisent ces opérations. On compare donc des valeurs issues de calculs analogues effectués en parallèle. Les tests de comparaison prennent en compte les bruits de calculs liés aux éventuels asynchronismes entre les différences chaînes.

Le type et le nombre de moyens mis en oeuvre pour les mesures et leur consolidation découlent de la synthèse des besoins de performance des systèmes utilisateurs définis en exigences :
- d'intégrité : risque lié à l'utilisation de données erronées suite à une défaillance non détectée,
- de continuité : risque lié à la perte des données suite à une défaillance détectée, et
- de disponibilité opérationnelle : probabilité que le système soit pleinement opérationnel.

Ces exigences sont représentées par des probabilités d'occurrence sur un temps d'exposition donné. Elles sont classifiées en fonction de la gravité potentielle liée à l'occurrence de cet événement. Un événement dont le risque peut être la perte de l'aéronef et de ses passagers doit avoir une probabilité inférieure à 10⁻⁹/h, un événement dont le risque peut être des dommages importants de l'aéronef doit avoir une probabilité inférieure à 10⁻⁷/h. Un événement dont le risque peut être la réduction des performances et des capacités opérationnelles de l'avion doit avoir une probabilité inférieure à 10⁻⁵/h.

D'une manière générale, on estime que les senseurs de mesures ont un taux de défaillance de 10⁻⁴/h et sont équipés de capacité de surveillance (ou monitoring selon l'expression anglo-saxonne) des défaillances ayant un taux de détection de 90%. D'autre part, les algorithmes de consolidation sont implémentés sur des calculateurs dont on considère que le taux de défaillance est de 10⁻⁵/h équipés de capacité de monitoring des défaillances ayant un taux de détection de 95%.

Pour tenir les objectifs de performances qui sont de plusieurs ordres de grandeur plus contraignants que celles que peuvent fournir une chaîne composée d'un senseur et d'un élément associé de traitement de signal, il est nécessaire d'introduire des architectures redondantes parallèles dont les résultats sont continûment comparés pour fournir des informations ayant les performances d'intégrité et de continuité recherchées.

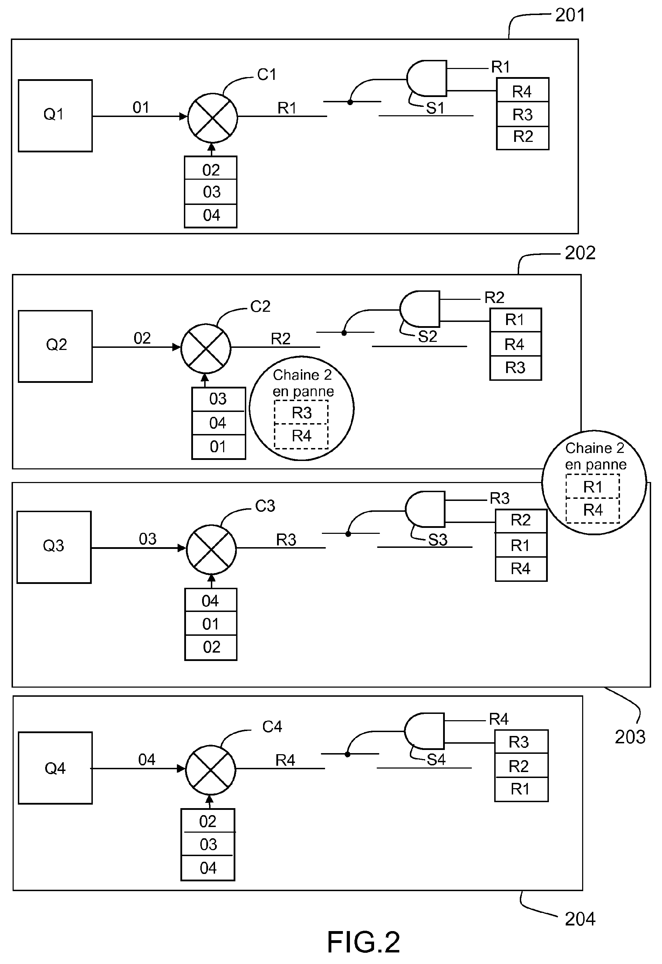

La figure 2 représente quatre chaines de consolidation reliées chacune à une pluralité de senseurs et appartenant à une même chaine de détermination (par exemple la chaine de détermination des références primaires inertielles). Cette configuration illustre le type d'architecture redondante évoquée précédemment. Cette architecture met en oeuvre une pluralité de senseurs de mesures et de calculateurs de consolidation interconnectés par des bus permettant des échanges d'information à haute cadence.

La figure 2 représente quatre chaines de consolidation 201, 202, 203, 204, chacune des chaines de consolidation étant associée à un indice et comportant :
- un moyen de calcul (Q1), relié à l'ensemble des senseurs de la chaine de détermination à laquelle les moyens adaptés pour la consolidation des données appartiennent, ledit moyen de calcul comparant les mesures des senseurs et permettant d'identifier des senseurs défaillants,
- un moyen de stockage ordonné des résultats de calcul des moyens de calcul (Q2,Q3,Q4) des autres chaines de consolidation (202,203,204), classant les résultats par ordre croissant des indices associés aux chaines de consolidation (de i+1 à n, et de 1 à i-1) et supprimant les résultats des chaines de consolidation détectées en panne,
- un premier comparateur (C1), effectuant une comparaison entre le résultat du moyen de calcul (Q1) et le premier résultat du moyen de stockage ordonné des résultats de calcul des moyens de calcul (Q2, Q3, Q4),
- un moyen de stockage ordonné des résultats des comparateurs (C2, C3, C4) ordonnant les résultats des comparateurs par ordre décroissant des indices associés aux chaines de consolidation (de i-1 à 1, et de n à i+1) et supprimant les résultats des comparateurs dont chaines de consolidation sont détectées en panne,
- un deuxième comparateur (S1), permettant de comparer le résultat du premier comparateur (C1) avec le résultat des premiers comparateurs (C2, C3, C4), de façon à couper la sortie sur le moyen de stockage Qᵢ et Oᵢ₊₁ (Q1 si i=n).

De cette manière, une panne non détectée dans un élément de calcul Qi, va entrainer la coupure des sorties Qᵢ et Oᵢ₊₁ (Q1 si i=n).

Les éléments de rangements des résultats des sorties des chaines de consolidation et des commandes des comparateurs, ont pour but de pouvoir reconfigurer la structure de comparaison en anneau en cas de perte d'une ou plusieurs chaines de consolidation.

Les mesures délivrées par la pluralité de senseurs sont comparées par les algorithmes de consolidation implémentés sur quatre éléments de calculs. Ces algorithmes de consolidation permettent d'identifier un ou plusieurs senseurs défaillants. La redondance d'implémentation des algorithmes de consolidation permet de garantir l'intégrité et la continuité du processus de consolidation par des mécanismes de comparateur des différentes sorties croisées deux à deux commandant des interrupteurs ou switches en anglais physiques permettant d'isoler les sorties défectueuses.

Le nombre minimal de senseurs et de calculateurs de consolidation qu'il est nécessaire de mettre en oeuvre dépend du niveau de performance d'intégrité et de continuité souhaité. Le tableau suivant indique le nombre minimal de senseurs et de calculateurs de consolidation qu'il est nécessaire de mettre en oeuvre pour tenir une variété de performance d'intégrité et de continuité.

| Exigence Intégrité | Exigence Continuité | Nombre de senseurs | Nombre de calculateurs effectuant la consolidation |
|---|---|---|---|
| Catastrophique | Catastrophique | 4 | 3 |
| Catastrophique | Dangereux | 4 | 3 |
| Dangereux | Catastrophique | 3 | 3 |
| Dangereux | Dangereux | 3 | 3 |
| Dangereux | Majeur | 3 | 2 |
| Majeur | Dangereux | 2 | 3 |
| Majeur | Majeur | 2 | 2 |

Les senseurs de radio navigation permettent de fournir une position de l'avion dans un référentiel terrestre au travers de calculs utilisant la triangulation, utilisant des mesures de distance ou de relèvements par rapport à des objets dont la position est connue. Cinq types différents de systèmes sont considérées dont l'utilisation dépend des phases de vols opérées par l'avion. Le tableau suivant établit la liste des systèmes qui permettent de supporter les différentes opérations.

| Phase de Vol | Système à utiliser |
|---|---|
| Navigation Océanique | GNSS |
| Navigation Domestique | GNSS/VOR/DME |
| Navigation en Approche | GNSS-SBAS/ILS |
| Atterrissage/Décollage | GNSS-GBAS/ILS/MLS |
| Taxi | GNSS-SBAS ou GBAS |

Pour la mise en oeuvre de l'invention, on considère que le moyen primaire de navigation permettant d'assurer la localisation de l'avion dans toutes ses phases de vol est la radionavigation par satellites avec ses augmentations. La navigation domestique (navigation à proximité d'un aéroport) à base de moyens conventionnels de positionnement comme le système connu sous l'acronyme anglais de VOR signifiant (VHF Omnidirectional Range) ou le système connu sous l'acronyme anglais de DME pour Distance Measuring Equipment, ou la navigation en approche utilisant la norme connu sous le nom de MLS (« Microwave Landing System ») ou la norme connu sous le nom de ILS (« Instrument Landing System ») sont considérées comme des moyens secondaires de navigation. Dans cette optique, la présente invention décrit donc les aspects consolidation vis à vis de la localisation satellitaire connu sous le nom de GNSS et ne détaille pas la consolidation vis à vis des moyens secondaires. Toutefois, des principes similaires à ceux décrits pour le GNSS peuvent s'appliquer sur ces moyens.

Les senseurs de radio navigation GNSS fournissent des mesures de distances par rapport à des satellites dont la position est connue. Ces mesures de distance peuvent être améliorées quand des systèmes d'augmentation fournissent des corrections permettant de corriger les erreurs de mesures GNSS observables par ces systèmes. De ces mesures, on déduits des informations de position/vitesse 3D, et de temps, dans un référentiel terrestre connu. Plus la position obtenue est précise, et plus elle permet de supporter des opérations qui se déroulent à proximité du sol. Avec le système GBAS signifiant « Ground Based Augmentation Systems » d'augmentation le plus performant, la position obtenue peut permettre de calculer des informations de guidage de l'avion utilisable jusqu'à son atterrissage. Le risque lié à la fourniture d'une information erronée non détectée peut dans ce cas avoir des conséquences catastrophiques dont la probabilité de doit pas excéder 10⁻⁹/atterrissage, et la perte de l'information près du sol peut amener à des situations hasardeuses dont la probabilité ne doit pas excéder 10⁻⁷/ atterrissage.

Cette contrainte nécessite de considérer un minimum de trois senseurs GNSS fournissant des mesures de distances satellites auxquelles seront appliquées des corrections GBAS. Cette contrainte peut sembler surabondante pour satisfaire les exigences correspondant aux autres phases de navigation pour lesquelles deux récepteurs seulement permettraient de garantir les performances d'intégrité et de continuité. En effet, la conséquence liée à la fourniture d'une information erronée non détectée est moins grave pour ces phases, et la probabilité acceptée pour ce risque est plus importante. Toutefois, le fait d'avoir trois senseurs permet de garantir les aspects disponibilités opérationnelles du moyen primaire de navigation en cas de panne d'un senseur avant décollage.

Les senseurs de mesures GNSS doivent avoir des performances compatibles d'une utilisation en mode augmenté SBAS signifiant « Satellite Based Augmentation System » et GBAS, conformes aux standards d'interopérabilités GNSS spécifiant les exigences de ces modes.

Il est aussi à considérer qu'en mode GBAS, les corrections doivent être fournies par une fonction de réception de donnés ou datatlink VHF. La contrainte sur la réception provient uniquement des besoins de continuité sur la fourniture des informations de correction, le protocole de transmission des données permettant d'en garantir l'intégrité au travers de mécanisme de contrôle de redondance. Si trois chaînes de réception GNSS sont requises pour la fourniture d'une position GBAS répondant au besoin atterrissage, deux chaînes seulement de réception VDB sont nécessaires pour répondre au besoin de continuité et d'allocation des avions aux pistes (dispatch).

Vis à vis des senseurs de radionavigation VOR/DME qui constituent un moyen secondaire de navigation, la prise en compte des différentes contraintes de performances amène à retenir des configurations comprenant deux senseurs VOR et deux senseurs DME.

Vis à vis des senseurs de radionavigation utilisant la norme connu sous l'acronyme anglais de ILS signifiant « Instrument Landing System » et sous l'acronyme anglais de MLS signifiant « Microwave Landing System » permettant de réaliser des approches de précision et des atterrissages, les différentes contraintes de performances amènent à retenir des configurations comprenant trois senseurs ILS/MLS ou deux senseurs duaux vis à vis de la partie traitement numérique des signaux. Compte tenu de la fiabilité élevée des éléments RF considérés pour réaliser une chaîne de réception ILS (LOC ou GLIDE) ou MLS, on considère que dans des architectures duales, un senseur RF peut être partagé par deux chaînes de fourniture des écarts.

Enfin il est à noter que les signaux VOR/VDB/ILS LOC sont diffusés dans la même bande de fréquence et leur réception peut être réalisée par des moyens communs de réception car l'usage de ces signaux est en général exclusif.

Le tableau suivant récapitule les différents senseurs de mesures radionavigation nécessaires à la fourniture des informations consolidées de localisation.

| Senseurs de mesures | Nombre min | Remarque |
|---|---|---|
| VOR | 2 | Signaux dans bande VHF |
| DME | 2 | Signaux dans bande UHF |
| VDB | 2 | Signaux dans bande VHF |
| LOC ILS | 2 | Signaux dans bande VHF |
| GLIDE ILS | 2 | Signaux dans bande UHF |
| MLS | 3 | Signaux dans bande SHF |
| GNSS | 3 | Signaux dans bande UHF |

Les senseurs inertiels fournissent des mesures du mouvement de l'avion en six dimensions (trois linéaires et trois angulaires) par rapport à un référentiel terrestres. Ces mesures sont effectués par des groupes (ou clusters) de trois accéléromètres et trois gyromètres regroupés dans des unités de mesures inertielles (ou UMI) qui fournissent des mesures de vitesse de rotation et d'accélération selon trois axes perpendiculaires dans l'espace, liés à la structure de ces UMIs. Les différentes contraintes de performance liées à la fourniture de ces informations sont les suivantes :
La fourniture d'informations inertielles consolidées non intègres ainsi que l'incapacité de contrôler l'intégrité des informations fournies sont considérés comme des événements catastrophiques pouvant entraîner la perte de l'avion. Ils doivent donc avoir une probabilité inférieure à 10⁻⁹/heure de vol. Cette contrainte nécessite de considérer un minimum de quatre blocs senseurs différents.

Le risque lié à la fourniture erronée non détectée d'information de références primaires inertielles consolidées étant considéré catastrophique, le mode commun de défaillance des blocs senseurs doit être exclu. Il est donc nécessaire de considérer des blocs senseurs de technologies différentes.

Pour opérer l'avion dans ces modes supérieurs de pilotage avec un haut niveau de disponibilité, il est nécessaire de considérer un certain nombre de blocs senseurs équipés de capteurs accélérométriques et gyrométriques de haute sensibilité. On considérera un minimum de deux dispositif permettant de détecter les mouvements et accélérations connus sous le nom de UMI dites de classe A (comprenant des capteurs gyrolaser avec sensibilité de mesure vitesse angulaire inférieure à 1/100 deg/heure, et capteurs accélérométriques pendulaires avec sensibilité de la classe 10µg). Les UMI dissimilaires restantes, pourront être des UMI dites de classe C suffisantes pour contrôler l'avion dans des modes de pilotages dégradés (comprenant des capteurs gyrolaser de type microsystèmes électromécaniques dits MEMS (pour *Microelectromechanical systems*) avec sensibilité de mesure vitesse angulaire inférieure à 5°deg/heure, et capteurs accélérométriques MEMS avec sensibilité de mesure de la classe quelques mg).

Les contraintes opérationnelles exigent de pouvoir démarrer un vol avec un équipement en panne sans que cela soit préjudiciable aux performances de l'avion. Cela requiert de considérer un bloc senseur supplémentaire au minimum. Le bloc UMI supplémentaire sera de préférence de classe A pour optimiser les performances opérationnelles avion en cas de double panne sur les UMI de classe A, toutefois, cela peut être aussi un bloc de classe C.

Le tableau suivant récapitule les différents senseurs inertiels nécessaires à la fourniture des informations consolidées de référence primaires inertielles.

| Senseurs de mesures | Nombre minimal | Remarque |
|---|---|---|
| Classe A | 2 ou 3 | Réponse au besoin mode supérieur de pilotage |
| Classe C | 2 | Réponse au besoin intégrité (mode commun de panne) et mode dégradé de pilotage |
| Classe A ou C | 1 | Réponse au besoin dispatch |

Les senseurs anémo-barométriques fournissent des mesures du mouvement de l'avion par rapport à l'air. Ces mesures sont effectuées par des groupes (ou clusters) de senseurs qui fournissent des mesures de d'incidence, de dérapage, de vitesse par rapport à l'air, de température et d'altitude.

Les différentes contraintes de performance liées à la fourniture de ces informations sont les suivantes :
La fourniture d'une vitesse air conventionnelle consolidée (CAS pour Calibrated Air Speed) non intègre ainsi que l'incapacité de contrôler l'intégrité de l'information fournie sont considérées comme des événements catastrophiques pouvant entraîner la perte de l'avion. Ils doivent donc avoir une probabilité inférieure à 10⁻⁹/heure de vol. Cette contrainte nécessite de considérer un minimum de quatre chaînes de mesures différentes.

La fourniture d'une information consolidée d'incidence (AOA pour Angle of Attack) non intègre est considérée comme un événement catastrophique, l'incapacité à contrôler l'intégrité de l'information fournie est considérée comme un événement dangereux (ou Hazardous selon l'expression anglo-saxonne). Cette contrainte nécessite de considérer un minimum de quatre chaînes de mesures différentes.

La fourniture d'une information consolidée d'altitude barométrique standard (Zb) non intègre est considérée comme un événement catastrophique, l'incapacité à contrôler l'intégrité de l'information fournie est considérée comme un événement Dangereux. Cette contrainte nécessite de considérer un minimum de quatre chaînes de mesures différentes.

La fourniture d'une information consolidée de dérapage (SSA) non intègre est considérée comme un événement Dangereux, l'incapacité à contrôler l'intégrité de l'information fournie est considérée comme un événement majeur. Cette contrainte nécessite de considérer un minimum de deux chaînes de mesures différentes.

Le risque lié à la fourniture erronée non détectée des informations consolidées anémo-barométriques de CAS ou AOA pouvant avoir des conséquences jugées catastrophiques, le mode commun de défaillance des chaînes de mesure air-data doit être exclu. Il est donc nécessaire de considérer des chaînes de mesure utilisant des technologies différentes. La réponse au besoin de dissimilarité peut amener à envisager des architecture basée sur des mesures de pression/température où la dissimilarité est introduite par le type de sonde utilisée, ou des architectures utilisant des chaînes fonctionnelles dans lesquelles les principes physiques de mesure mis en oeuvre diffèrent : utilisation mesure de pression et anémométrie laser, mesure d'angles par girouette mécanique, par capteurs ultrason, ou par technologie laser.

Le tableau suivant récapitule les différents chaînes fonctionnelles nécessaires à la fourniture des informations consolidées air-data.

| haînes de mesures | Nombre min | Remarque |
|---|---|---|
| Zb | 4 | |
| CAS | 4 | utilise les mesures de Températures si mesures anémo laser. |
| TAS | 3 | utilise les mesures de Températures si mesures pression. |
| AOA | 4 | |
| SSA | 2 | |
| SAT, TAT | 3 | |

Afin de décrire différentes architectures du dispositif selon l'invention, on définit pour chacune des chaines de détermination d'information (localisation, références inertielles, références anémo-barométriques), des architectures logiques de référence et les principaux composants logiques, ou sous moyens ou sous dispositifs associés. Ces composants logiques sont par exemple une puce dédié ou une carte électronique comportant un processeur générique, de la mémoire et des puces dédiés. Les composants logiques de ces chaines sont les suivants :
- MCR : composant logique de fourniture de mesures et messages GNSS. Conformément à ce qui a été exposé dans le paragraphe senseurs de navigation il est nécessaire d'avoir au minimum trois blocs MCR dans l'architecture.
- Consol GNSS RD : composant logique de consolidation amont des données brutes GNSS. Le but de ce bloc logique est la détection d'anomalies sur les mesures et les messages GNSS dues à l'environnement de réception avion. (panne antenne, récepteur, multi-trajet sur une antenne). Il est nécessaire d'avoir au minimum trois composants logiques Consol GNSS RD dans l'architecture.
- Consol POS3D : composant logique de consolidation avale de la fourniture de positions 3D GNSS compatible des besoins de navigation et d'approches. Ces positions peuvent être hybridées avec des informations inertielles. Pour calculer une position compatible des besoins approches, les mesures GNSS consolidées sont corrigées par des corrections différentielles fournies des systèmes d'augmentation GNSS. Le but de ce bloc logique est la détection d'anomalies sur les calculs de positions effectuées à partir des mesures GNSS et inertielles consolidées, et éventuellement des informations de correction fournies par les VDB. Il est nécessaire d'avoir au minimum trois composants logiques Consol POS3D dans l'architecture.
- Consol GLS/FLS : composant de consolidation avale de la fourniture d écart de guidages calculés à partir d'une position GNSS augmentée fournie par le bloc consol POS3D. Les déviations sont calculées par rapport à une trajectoire d'approche dont les caractéristiques sont fournies aux composants. Le but de ce bloc logique est la détection d'anomalies sur les calculs d'écart de guidage réalisés à partir des positions GNSS augmentées. Il est nécessaire d'avoir au minimum trois composants logiques Consol GLS/FLS dans l'architecture.
- VHF : composant logique de réception VHF permettant de fournir des mesures échantillonnés de signal dans la bande VHF permettant le traitement de signal numérique des signaux VOR/VDB/ILS LOC. Il est nécessaire d'avoir au minimum 2 composants dans l'architecture.
- UHF : composant logique de réception permettant de fournir des mesures échantillonnées de signal dans la bande UHF permettant le traitement de signal numérique des signaux ILS Glide (et éventuellement DME). Il est nécessaire d'avoir au minimum 2 composants dans l'architecture
- VDB : composant logique de traitement des signaux VDB échantillonnés fournissant les messages datalink pour calculer une position GNSS différentielle améliorée supportant le mode approche. Il faut deux composants logique VDB dans l'architecture.
- VOR composant logique fournissant des relèvements VOR à partir du traitement des signaux VHF. Il faut deux composants VOR dans l'architecture.
- DME composant logique fournissant des distances DME. Il faut deux composants DME dans l'architecture.

On décrit ci-après deux variantes d'architecture logique du dispositif selon l'invention.

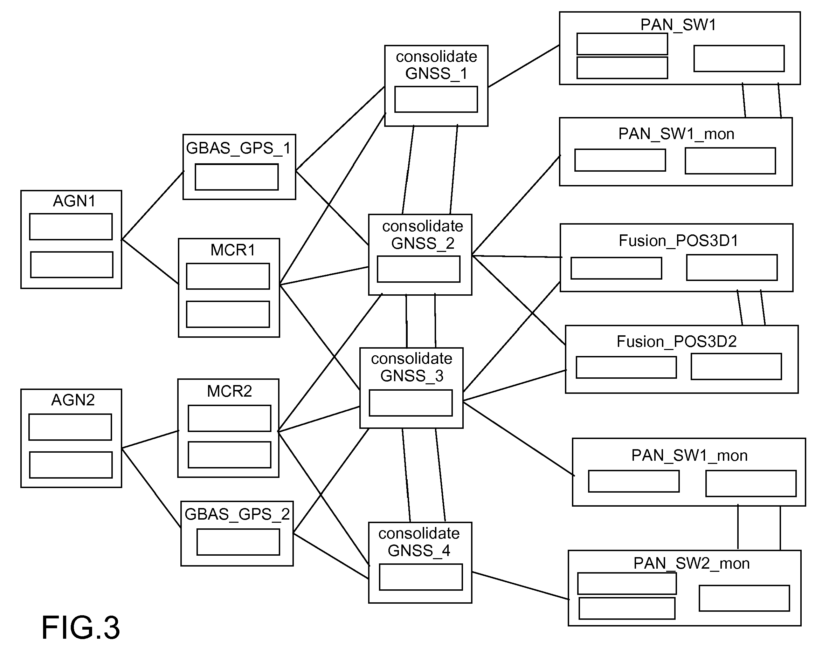

La figure 3 représente une première variante d'une architecture logique du dispositif selon l'invention.

Dans la première variante d'architecture logique, les moyens 111 de mesure de données radionavigation sont mis en oeuvre par deux composants logiques (MCR1, MCR2) et deux composants logiques dissimilaires (GBAS_GPS_1, GBAS_GPS_2) reliés chacun à deux antennes (AGN1, AGN2) fournissant des mesures synchrones sur les signaux de radionavigation (GNSS_Rd1, GNSS_Rd2, GPS_Rd1, GPS_Rd2) et des messages de navigations. Les mesures fournies sont synchronisées sur le temps GPS.

Les moyens adaptés 112 pour la consolidation des données de radionavigation mesurées sont mis en oeuvre par quatre composants logiques (consolidate_GNSS_1, consolidate_GNSS_2, consolidate_GNSS_3, consolidate_GNSS_4) pour la consolidation des mesures sur les signaux de radionavigation (GNSS_Rd1, GNSS_Rd2, GPS_Rd1, GPS_RD2).

Les moyens adaptés 113 pour le calcul de paramètres de position de l'aéronef et les moyens adaptés 114 pour la consolidation des paramètres de position calculés sont mis en oeuvre par deux composants logiques (fusion_POS3D1, fusion_POS3D2) pour le calcul de positions de l'aéronef à partir de mesures de données inertielles consolidées (C_INS1, C_INS2) et mesure de signaux radionavigation consolidées (C_GNSS1, C_GNSS2).

Le dispositif comprend en outre :
- deux composants (PAN_SW1, PAN_SW2) pour l'activation, pour une approche donnée, d'un moyen d'approche sélectionné par le pilote, et le calcul de déviations par rapport à une trajectoire d'approche de référence prédéterminée, et
- deux composants logiques (PAN_SW1_mon, PAN_SW2_mon) pour la consolidation des calculs des déviations.

Les mesures synchrones sur les signaux de radionavigation (GNSS_Rd1, GNSS_Rd2, GPS_Rd1, GPS_Rd2) sont consolidées entre elles au niveau des composants logiques (consolidate_GNSS_1, consolidate_GNSS_2, consolidate_GNSS_3, consolidate_GNSS_4) pour la consolidation des mesures sur les signaux de radionavigation. La consolidation peut également utiliser des prédictions de mesures effectuées par les composants logiques (fusion_POS3D1, fusion_POS3D2) pour le calcul de positions de l'aéronef. Les composants logiques (consolidate_GNSS_1, consolidate_GNSS_2, consolidate_GNSS_3, consolidate_GNSS_4) pour la consolidation des mesures sur les signaux de radionavigation réalisent également des calculs d'attitude de la base d'antenne constituée par les deux antennes (AGN1, AGN2). Le résultat de la consolidation est un ensemble de mesures consolidées GNSS « C_GNSSi ».

Les composants logiques (fusion_POS3D1, fusion_POS3D2) pour le calcul de positions de l'aéronef utilisent des mesures inertielles consolidées « C_INSi » et les mesures consolidées GNSS « C_GNSSi »,

Dans ces blocs sont effectués des calculs d'hybridation inertie GPS qui permettent de réaliser des prédictions sur les paramètres inertielles « IR_expi » et les mesures « GNSS GN_Expi ». Ces prédictions sont utilisées dans les blocs de consolidation amont pour améliorer le monitoring des mesures effectuées par les senseurs inertiels ou GNSS. D'autre part, les blocs s'échangent des données de contrôles « PCTLij » qui permettent de vérifier la cohérence mutuelle de l'intégrité calculs effectués et de commander l'arrêt de l'émission des données calculés par le bloc en cas de détection d'incohérence.

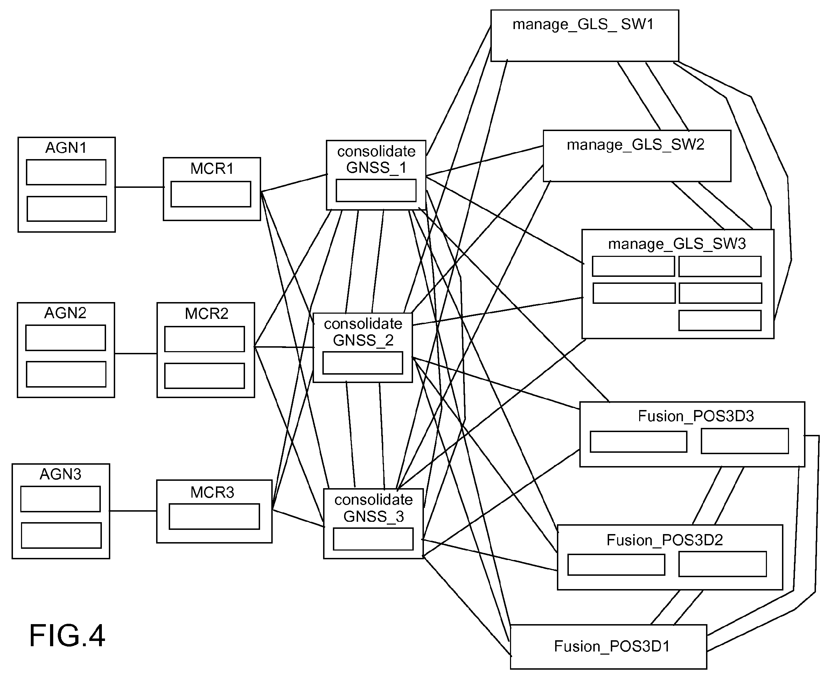

La figure 4 représente une deuxième variante d'architecture logique du dispositif selon l'invention.

Dans la deuxième variante d'architecture logique, les moyens 111 de mesure de données radionavigation comprennent trois composants logiques (MCR1, MCR2, MCR3) reliés chacun à trois antennes (AGN1, AGN2, AGN3) fournissant des mesures synchrones sur des signaux de radionavigation (GNSS_Rd1, GNSS_Rd2, GNSS_RD3) et des messages de navigations.

Les moyens adaptés 112 pour la consolidation des données de radionavigation mesurées comprennent trois composants logiques (consolidate_GNSS_1, consolidate_GNSS_2, consolidate_GNSS_3) pour la consolidation des mesures sur les signaux de radionavigation (GNSS_Rd1, GNSS_Rd2, GNSS_RD3).

Les moyens adaptés (113) pour le calcul de paramètres de position de l'aéronef et les moyens adaptés (114) pour la consolidation des paramètres de position calculés sont mis en oeuvre par deux composants logiques (fusion_POS3D1, fusion_POS3D2, fusion_POS3D3) pour le calcul de positions de l'aéronef à partir de mesures de données inertielles consolidées (C_INS1, C_INS2, C_INS3) et mesure de signaux radionavigation consolidées (C_GNSS1, C_GNSS2, C_GNSS3).

Le dispositif pour la détermination d'informations de localisation comprend en outre: trois composants (manage GLS_SW1, Manage_GLS_SW2 et Manage_GLS_SW3) pour l'activation, pour une approche donnée, d'un moyen d'approche sélectionné par le pilote, pour le calcul et la consolidation de déviations par rapport à une trajectoire d'approche de référence prédéterminée.

Les deux architectures permettent d'obtenir un niveau équivalent de performance en termes d'intégrité et de continuité.

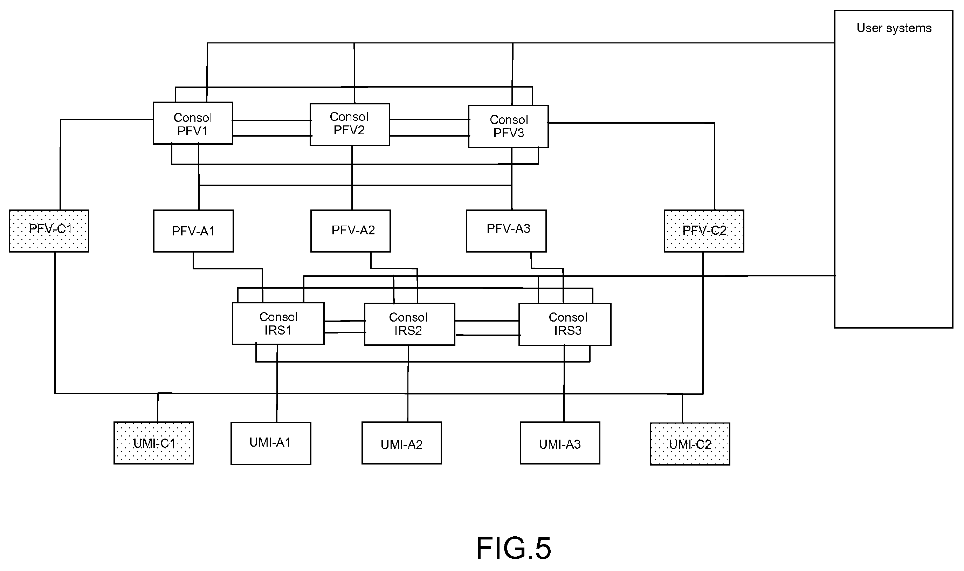

La figure 5 présente une architecture générique « chaine de références inertielles ». Dans cette figure, les composants logiques utilisés sont les suivants :
- UMI-A : composant logique de fourniture de mesure inertielles acquis par des senseurs de classe A. Conformément à ce qui a été exposé dans le paragraphe senseurs de navigation il est nécessaire d'avoir au minimum trois composants logiques UMI-A dans l'architecture.
- UMI-C : composant logique de fourniture de mesure inertielles acquis par des senseurs de classe C. Conformément à ce qui a été exposé dans le paragraphe senseurs de navigation il est nécessaire d'avoir au minimum deux composants logiques UMI-C dans l'architecture. Ces composants seront réalisés dans des technologies différentes des composants de classe A.
- Consol IRS: composant de consolidation amont des informations de mesures inertielles. Le but de ce bloc logique est la détection d'anomalies sur les mesures inertielles effectuées par le cluster de blocs senseurs de différentes classes. (défaillance capteur, détection réponse anomalie de mesures sur environnement anormal). Il est nécessaire d'avoir au minimum trois composants logiques consol IRS dans l'architecture
- PFV-A : composant logique de calcul de références inertielles par intégration des mesures inertielles acquises par les senseurs de classe A.
- PFV-C : composant logique de calcul de références inertielles par intégration des mesures inertielles acquises par les senseurs de classe C.
- Consol PFV : composant de consolidation avale des paramètres inertiels intégrés. Ce bloc effectue la détection d'anomalie sur le calcul des paramètres inertiels calculés à partir des mesures inertielles consolidées (défaillance de l'unité de calcul, défaut de logiciel, défaillance capteur non détectée en amont). Il est nécessaire d'avoir au minimum trois composants logiques Consol PFV dans l'architecture.
Cette architecture type pour une chaine de références inertielles, met en oeuvre des capteurs de performances différentes et de réalisation technologique dissimilaires.

Selon le niveau de précision, d'intégrité, de continuité et de disponibilité opérationnelle requis pour la fourniture des informations de références inertielles, toute autre combinaison est envisageable, à la fois en terme de nombre et de type de senseurs. (Par exemple, une combinaison 2 chaines type A + 2 chaines type C),
Dans la variante d'architecture proposée par la figure 5, les moyens 121 de mesures inertielles sont mis en oeuvre par 3 composants logiques (UMI-A1, UMI-A2, UMI-A3) et deux composants logiques dissimilaires (UMI-C1, UMI-C2). Ces composants fournissent les mesures inertielles brutes d'accélérations et de vitesses angulaires (INS-X RD : Raw Data). Ces données sont consolidées par les moyens adaptés 122, mis en oeuvre par trois composants de consolidation (Consol-IRS1, Consol-IRS2, Consol-IRS3). Les mesures consolidées sont disponibles pour les systèmes utilisateurs (User systems).
Les moyens adaptés 123 pour le calcul des paramètres intégrés de références inertielles sont mis en oeuvre par 3 composants logiques (PFV-A1, PFV-A2, PFV-A3) traitant les données mesurées par les composants UMI-A, et deux composants logiques (PFV-C1, PFV-C2) traitant les données mesurées par les composants UMI-C. Les données issues des composants PFV sont consolidées par les moyens 124, mis en oeuvre par trois composants logiques de consolidation (Consol PFV1, Consol PFV2, Consol PFV3). Ces données consolidées sont disponibles pour les systèmes utilisateurs (User systems).

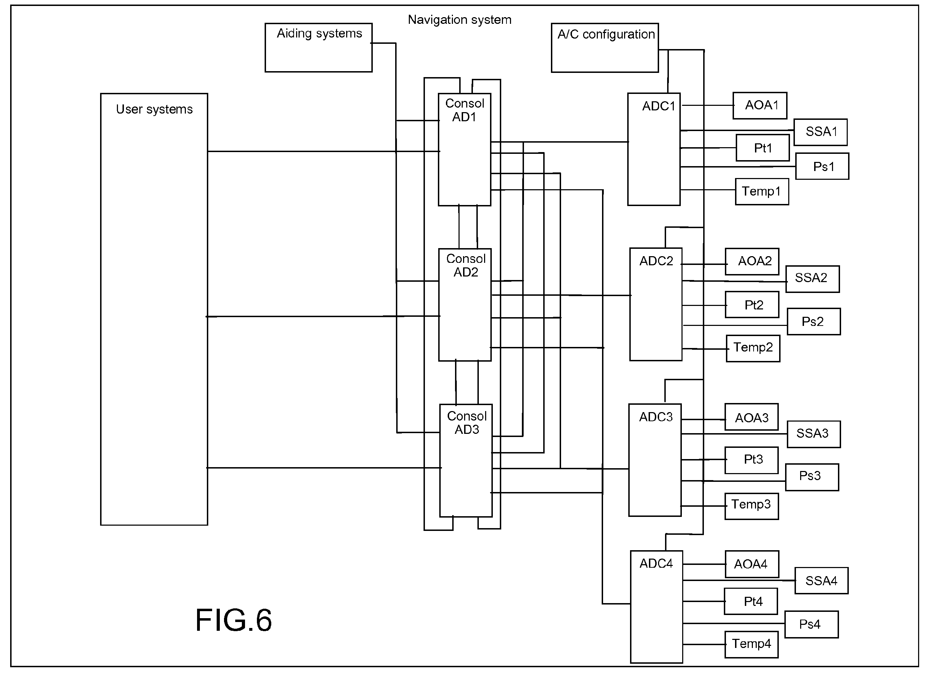

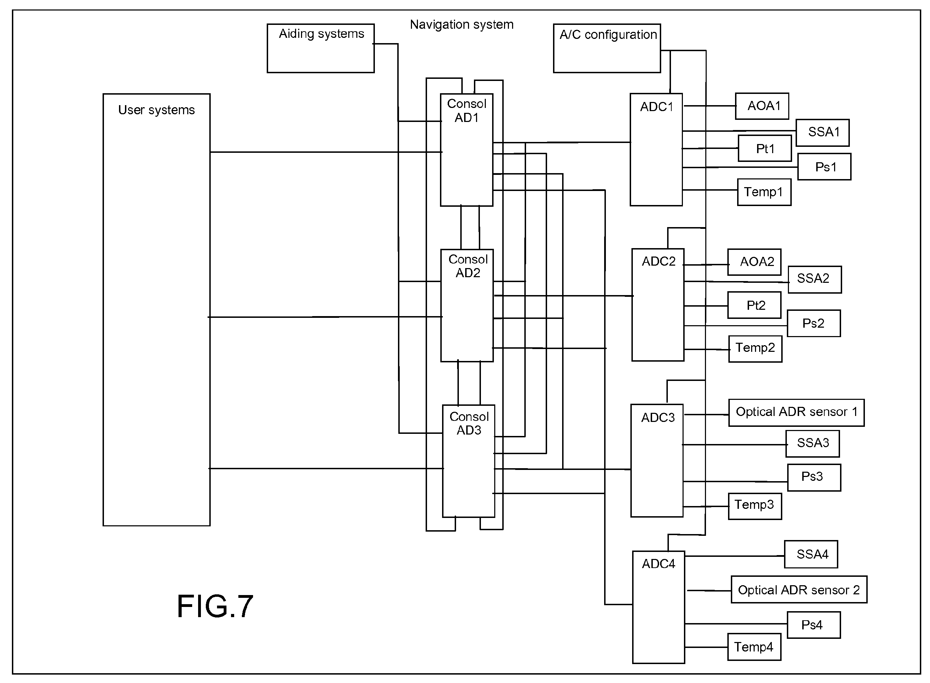

Les figures 6 et 7 présentent des architectures génériques « chaines de référence anémobarométriques ».
Les composants logiques d'implémentation pour la détermination des références anémobarométriques sont alors les suivants :
- Pt : composant logique de mesure de la pression totale
- Ps : composant logique de mesure de la pression statique
- Temp : composant logique de mesure de la température de l'air
- AOA : composant logique de mesure de l'angle d'incidence air (Angle Of Attack)
- SSA : composant logique de mesure de l'angle de dérapage air (Angle Of Sideslip)
- ADC : composant logique de calcul des différents paramètres anémobarométriques (ce composant peut inclure des fonctions de consolidation amont des mesures senseurs).
- Consol AD : composant logique réalisant la consolidation amont et avale des informations anémo-barométriques en provenance des composants ADC. Il est nécessaire d'avoir au minimum trois blocs Consol AD dans l'architecture. Le but de ce bloc logique est la détection d'anomalies sur les mesures air data effectuées par les sondes. (défaillance capteur, détection réponse anomalie de mesures sur environnement anormal). Ce bloc effectue également la détection d'anomalie sur le calcul des paramètres air-data calculés par les blocs ADC.
- Optical ADR sensor : composant logique de mesure de composantes du vecteur vitesse air par des moyens optiques de type anémométrie laser (Selon le nombre d'axes de mesure, ce composant fournira des données mono, bi ou tri dimensionnelles).

La figure 6 présente une architecture générique typique à 4 chaînes sans anémomètre laser. Chaque chaîne comporte des moyens 131 de mesures mis en oeuvre par des composants logiques type Pti, Psi, AOAi, SSAi. Les moyens 132 de consolidations et 133 de calculs anémo-barométriques sont mis en oeuvre par des composants logiques ADCi. Ces composants exploitent des informations de configuration de l'avion (par exemple configurations trains d'atterrissage, becs, volets) venant de systèmes extérieurs pour gérer des corrections appliquées aux mesures brutes issues des moyens 131. Certaines chaînes de mesure et de calcul (chaînes 3 et 4 sur l'exemple de la figure 6) seront mises en oeuvre autant que possible par des solutions techniques dissimilaires.

Les données issues des composants ADC sont consolidées par les moyens 134, mis en oeuvre par trois composants logiques Consol ADi. Ces dispositifs consolident entre elles les données issues des multiples composants ADC, et peuvent également utiliser des données issues de systèmes autres (Aiding systems) que des systèmes dédiés « air data » (par exemple des mesures de pression ou de température air fournies par le système de gestion des moteurs de l'avion). Les données consolidées sont distribuées vers les systèmes utilisateurs (user systems).

La figure 7 présente une architecture générique typique avec anémomètre laser à 4 voies, dont deux voies de mesure intègrent la technologie « anémométrie laser ».

Elle représente un exemple d'implémentation ; selon le niveau de performance requis (précision, intégrité, continuité, disponibilité), des architectures avec une combinaison différentes de senseurs et des redondances plus ou moins importantes pour tout ou partie des mesures sont possibles.

Comparée à l'architecture de la figure 5, cette architecture comporte des moyens 131 de mesures mis en oeuvre par des composants logiques type Pti, Psi, AOAi, SSAi, et également de type Optical ADR sensor. Les composants Optical ADR sensor peuvent fournir des mesures monodirectionnelle, bidirectionnelles ou tri directionnelles du vecteur vitesse air. Les moyens 132 et 133 de consolidation et calcul seront mis en oeuvre par des composants ADC différents selon qu'ils doivent traiter ou pas des mesures anémométrie laser.

Les architectures physiques présentées ci-après permettent d'implémenter les architectures logiques décrites précédemment. Elles définissent un certain nombre de composants physiques d'architectures qui contiennent les différents composants logiques identifiés, et qui permettent de définir les fonctions de ces équipements.

Les équipements physiques de l'architecture sont interconnectés au travers d'un réseau de communication (bus numériques multiplexés haut débit) qui permet l'échange des informations nécessaires pour effectuer les fonctions de ces équipements.

Chacune des deux architectures physiques décrites ci-après comprend deux équipements de radio navigation (RAD-NAV) regroupant l'ensemble des moyens radios classiques (VOR/DME/ILS/MLS/MKR), ainsi que la VDB pour le mode GBAS.

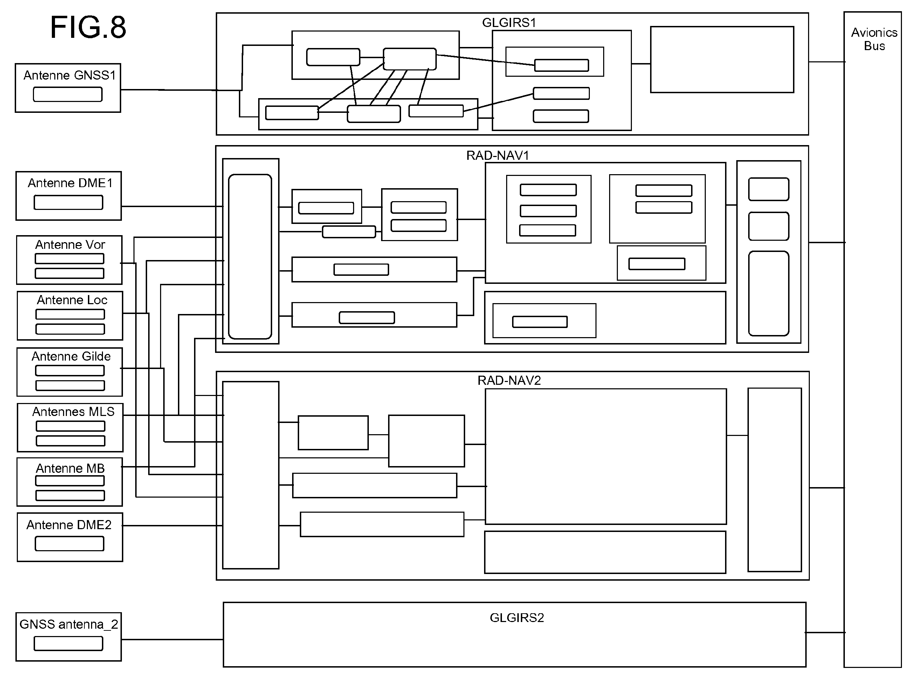

La figure 8 représente une première variante d'une architecture matérielle du dispositif selon l'invention.

Une première variante d'architecture physique est une implémentation physique de la première architecture logique (dual) présentée précédemment. La première variante d'architecture physique comprend : deux récepteurs de données de radionavigation (GNSS) et deux équipements GLGIRS.

L'équipement GLGIRS comprend des moyens matériels et logiciels pour la mise en oeuvre des composants logiques UMIA, MCR, Consol IRS, consol GNSS, consol POS3D.

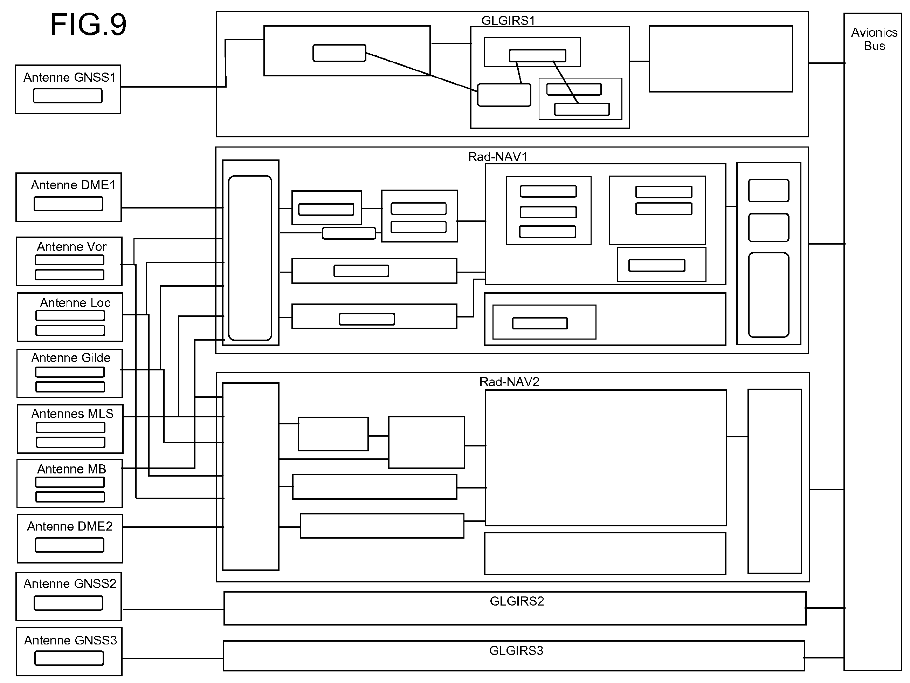

La figure 9 représente une deuxième variante d'une architecture matérielle du dispositif selon l'invention.

La deuxième variante d'architecture physique est une implémentation physique de la deuxième architecture logique (triplex) présentée précédemment. La deuxième variante d'architecture physique comprend : trois récepteurs de données de radionavigation (GNSS) et trois équipements GLGIRS.

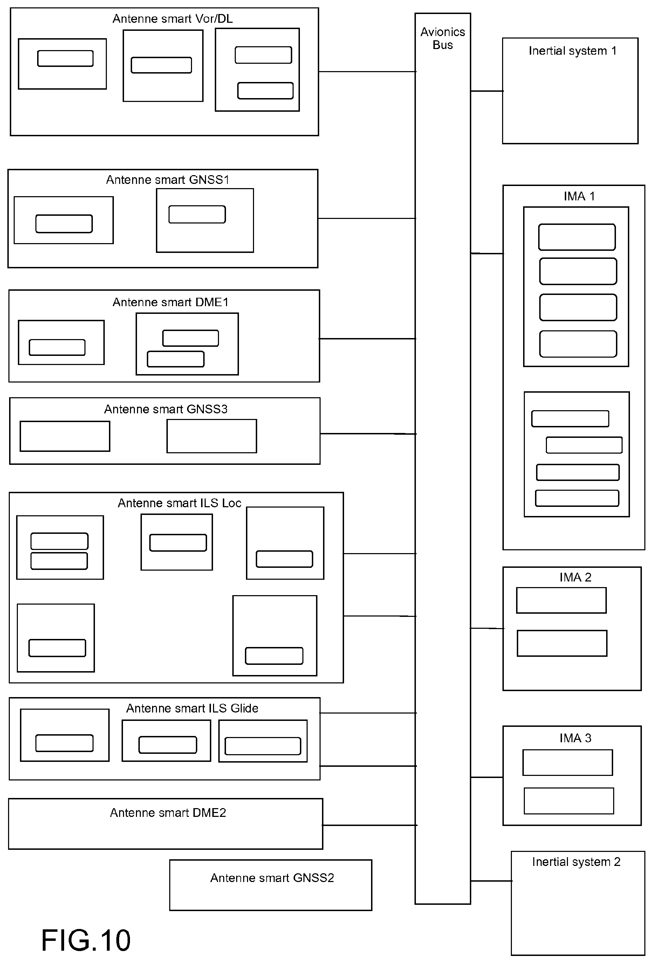

La figure 10 représente une troisième variante d'une architecture matérielle du dispositif selon l'invention.

La troisième variante d'architecture physique appelée antenne intelligente (ou Smart antenna) est une implémentation physique de l'architecture logique triplex présentée précédemment dans laquelle le dispositif comporte 3 MCR et 3 antennes GNSS.

Dans cette variante, les moyens radios, les antennes et les moyens de traitement analogiques et numériques des signaux antennes sont regroupés dans des composants fournissant des données qui peuvent être traitées par des calculateurs génériques.

Deux axes directeurs majeurs permettent d'orienter la construction des architectures physiques pour la chaîne références inertielles :
- Grouper les divers composants logiques (UMI = capteurs, composant logiciel de calculs PFV et composants logiciels de consolidations) dans un même équipement : c'est la base du concept d'IRS, qui peut évoluer ensuite en ADIRS si on y intègre la fonction ADR, ou GIRS si on intègre les fonctions GPS, etc...
- Dissocier le composant UMI et les composants de calculs PFV et consolidation, déportés sur une ressource de calcul générique type IMA ou implémentés par d'autres calculateurs.

Par ailleurs, l'introduction de dissimilarité pour les composants logiques de calcul pourra se faire par des réalisations logicielles différentes et/ou des implémentations sur des plateformes physiques différentes.

Les variantes d'architecture physiques proposées ci-dessous constituent des exemples génériques. Tout autre arrangement combinant les principes des architectures génériques est possible.

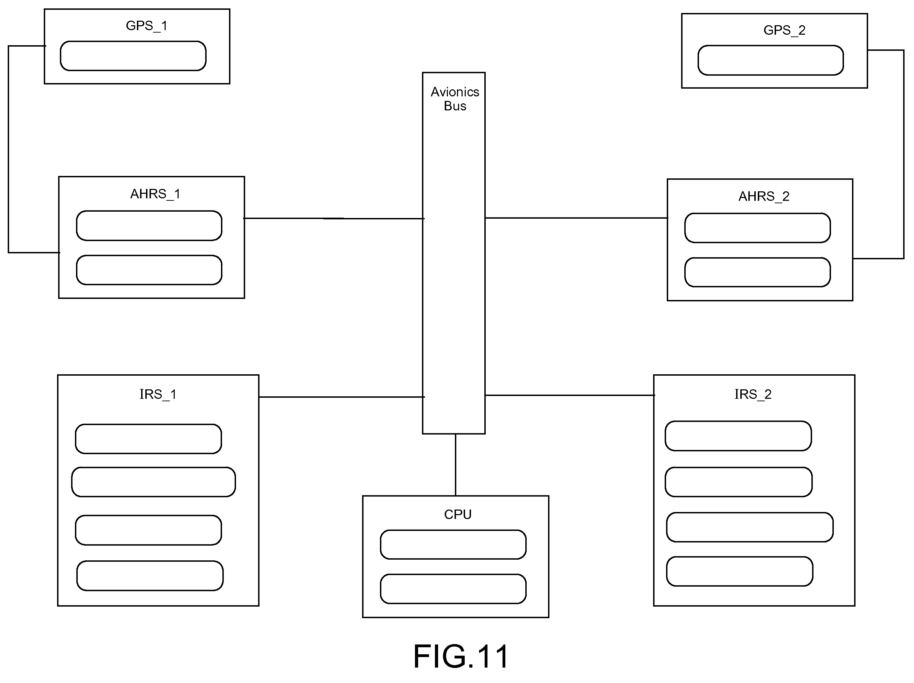

La figure 11 représente une première variante d'architecture matérielle dans laquelle les divers composants sont implémentés classiquement sous forme d'équipements type IRS (Inertial Reference System) et AHRS (Attitude and Heading Reference System) selon la classe de performance.

Les AHRS utilisent des données GPS pour d'une part réaliser une hybridation inertie/GPS permettant d'obtenir des performances améliorées pour les attitudes, d'autre part pour définir une référence de cap vrai à partir de mesures bi-antennes. Cette référence de cap est utilisée pour hybridation avec les mesures inertielles pour élaborer un cap gyrostabilisé.

Les AHRS délivrent des accélérations et vitesses angulaires, ainsi que des informations d'attitude, cap et vitesse verticale, qui sont envoyées vers les composants de consolidation implémentés dans les IRS.

Les échanges entre composants physiques s'effectuent via des bus de données rapides et sécurisés (garantissant les niveaux d'intégrité et continuité requis).

Les composants de consolidation peuvent être implémentés dans les IRS et/ou les AHRS et/ou sur des plateformes de calcul génériques (CPU).

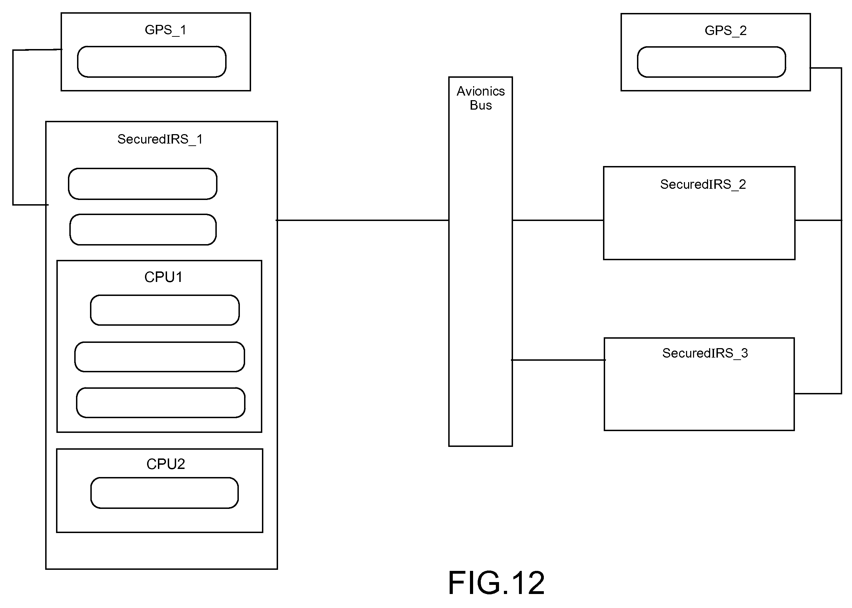

La variante d'architecture présentée sur la figure 12 comprend trois équipements dénommés « Secured-IRS ».

En intégrant dans le même équipement un canal de classe A et un canal dissimilaire de classe C (hybridé GPS pour améliorer les performances d'attitudes et de cap), on obtient un équipement inertiel S-IRS (Secured-IRS) fournissant des données consolidées avec une intégrité de niveau catastrophique en sortie d'un équipement unique.

L'organisation interne du produit S-IRS devra être soigneusement étudiée pour maintenir une ségrégation forte entre chaînes de classe A et C, en particulier au niveau des alimentations électriques, des interfaces de communication et du partitionnement des traitements logiciels.

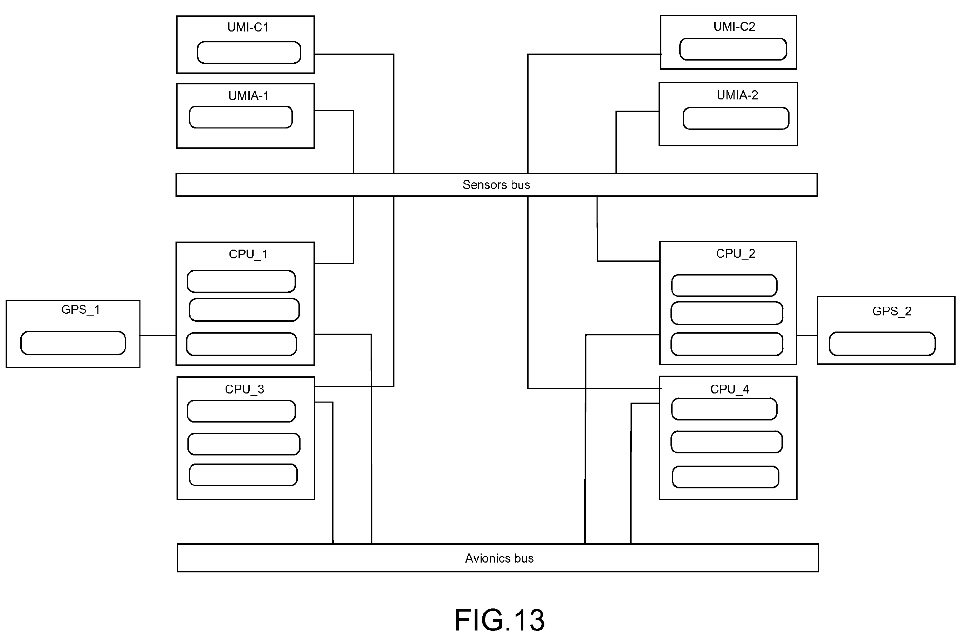

A l'opposé de la logique de regroupement maximal présenté par l'architecture précédente, la variante de la figure 13 obéit à une logique de séparation des composants UMI (senseurs inertiels) et des composants de calcul.

L'objectif d'une telle architecture est d'obtenir des boitiers UMI compacts, que l'on pourra facilement installer à des emplacements plus favorables pour les mesures inertielles.

Pour éviter le risque de modes communs, les traitements PFV-A et PFV-C devront être implémentés sur des plateformes de calcul ségréguées et dissimilaires. Sur ces ressources CPU seront implémentées les composants SW de consolidation (des réalisations algorithmiques différentes améliorant également la résistance aux modes communs et permettant de réduire le niveau DAL (Design Assurance Level) de développement).

Le débit d'information important en sortie des composants UMI sera supporté par un bus local dédié, assurant la communication entre composants senseurs UMI et composants de calcul sur les CPU génériques.

Les possibilités d'implémentations physiques de la chaine anémo-barométrique sont extrêmement variées. Elles sont dictées par quelques principes directeurs majeurs :
- organisation du regroupement de diverses fonctions de mesure pour constituer des sondes multifonctions,
- emplacement des ressources de calcul implémentant les composants de calcul et de consolidation.

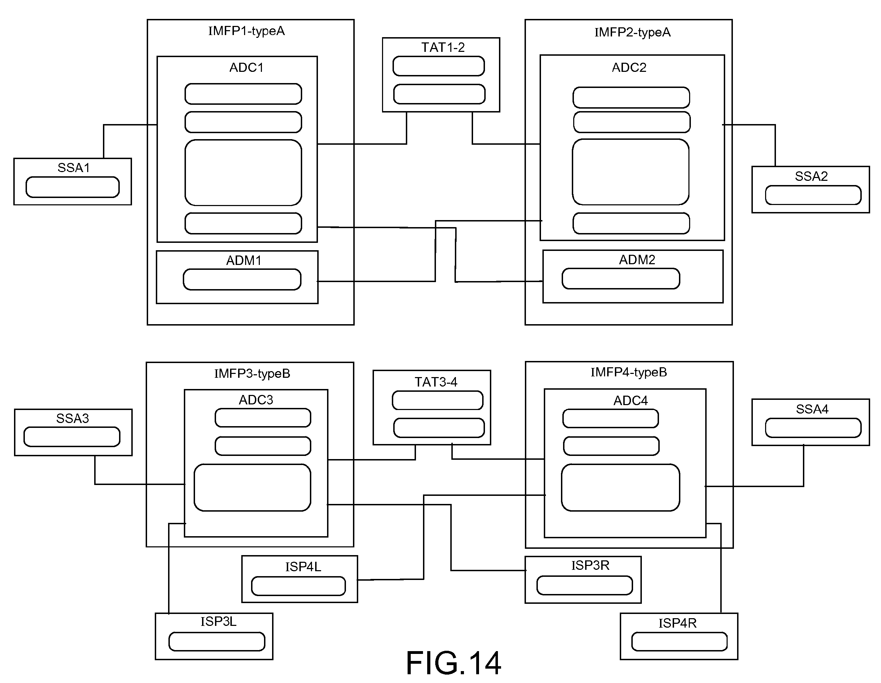

La figure 14 présente une première variante d'architecture qui comprend deux implémentations de sondes multifonctions. Les sondes de type A (IMFP-A pour Integrated Multi Functions Probe type A) regroupent les composants logiques type Pt, Ps, AOA, ADC. Elles peuvent s'interfacer avec des sondes extérieures fournissant des mesures de température et de dérapage (composant SSA). Chaque sonde intègre deux mesures de Ps ségréguées, dont une mesure Ps destinée à la sonde installée sur le côté opposé pour compensation d'un effet éventuel du dérapage sur les mesures de pression. Les sondes de type B (IMFP-B pour Integrated Multi Functions Probe type B) présentent une variante d'implémentation, et regroupent les composants logiques Pt, AOA et ADC. Les composants logiques type Ps sont implémentés par des sondes intégrées ISP (Integrated Static Probe). Deux sondes ISP sont implantées de chaque côté de l'avion afin d'accéder à une mesure de Ps corrigée d'un éventuel effet du dérapage.

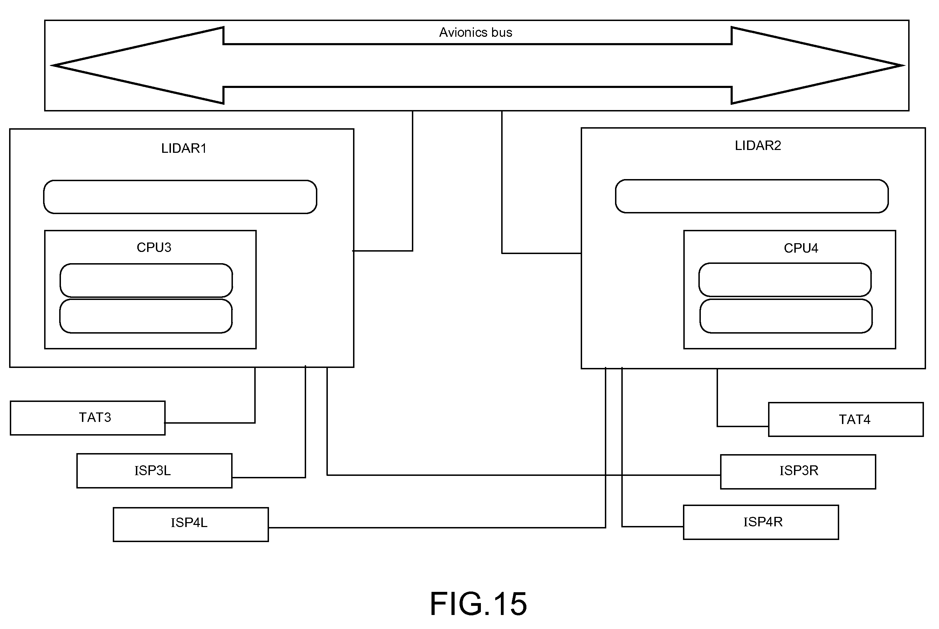

Une variante de l'architecture précédente consiste à remplacer certaines voies par une implémentation à base d'anémométrie laser. La figure 15 représente une première variante d'implémentation de deux voies de mesure basées sur la technologie anémométrie laser. Dans cette variante, les moyens de mesure optique (Optical ADR sensor), de calcul des données air (ADC_SW) et de consolidation des données air (Consol AD_SW) sont intégrés dans un même composant, dénommé LIDAR sur la figure. Ce composant réalise également l'acquisition de données de température et de pression statique fournies par des composants externes (TATi et ISPi), données nécessaires au calcul des données air.

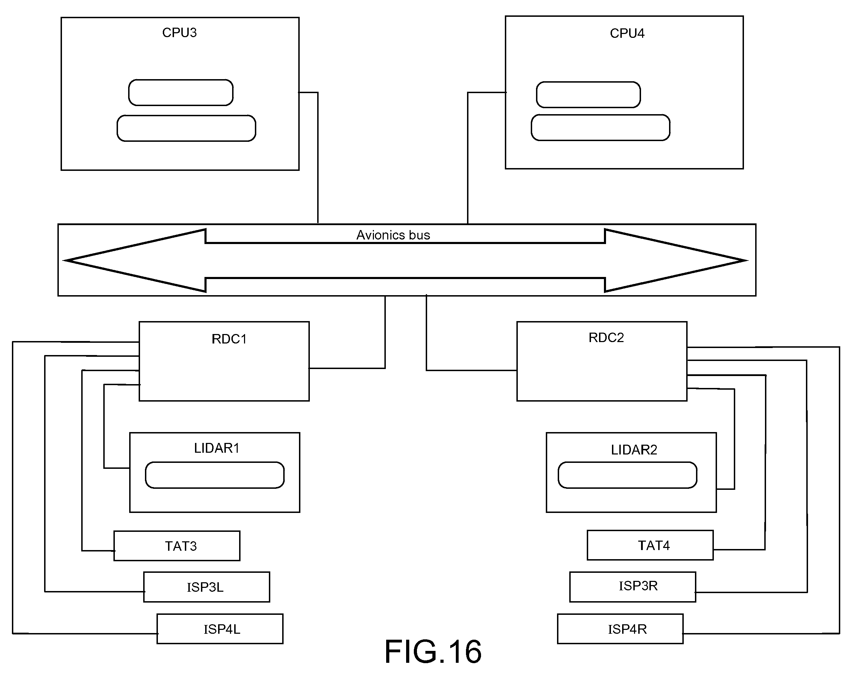

La figure 16 représente une seconde variante d'implémentation des deux voies de mesure basées sur la technologie anémométrie laser. Dans cette variante, le composant physique LIDAR n'implémente que les moyens de mesure optique. Les composants dédiés aux calculs de données air et à leur consolidation sont implémentés sur des calculateurs génériques de type IMA (Integrated Modular Avionics). Les données de température et de pression statique nécessaires au calcul des données air sont fournies par des composants externes (TATi et ISPi). Ces données sont collectées par des composants physiques de type RDC (Remote Data Concentrator) et transmises aux composants de calculs via des bus de données avionques rapides et sécurisés (Avionics backbone bus).

## Revendications

1. Dispositif (100) pour la détermination d'informations de localisation, de références primaires inertielles et de données anémo-barométriques consolidées pour un aéronef, comportant :
- une chaine (110) de détermination des informations de localisation comprenant :
o des moyens (111) de mesure de données de radionavigation,
o des moyens adaptés (112) pour la consolidation des données de radionavigation mesurées,
o des moyens adaptés (113) pour le calcul de paramètres de position de l'aéronef à partir des données de radionavigation consolidées,
o des moyens adaptés (114) pour la consolidation des paramètres de position calculés,
- une chaine (120) de détermination des références primaires inertielles comprenant :
o des moyens (121) pour la mesure de données inertielles indiquant le mouvement de l'aéronef par rapport à un référentiel terrestres,
o des moyens adaptés (122) pour la consolidation des données inertielles mesurées,
o des moyens adaptés (123) pour le calcul de paramètres de référence inertiels de l'aéronef à partir des données inertielles consolidées,
o des moyens adaptés (124) pour la consolidation des paramètres de référence inertielle calculés,
- une chaine (130) de détermination de données anémo-barométriques comprenant :
o des moyens (131) pour la mesure de données anémo-barométriques indiquant le mouvement de l'aéronef par rapport à l'air,
o des moyens adaptés (132) pour la consolidation des données anémo-barométriques mesurées,
**caractérisé en ce que** ledit dispositif comporte :
o des moyens adaptés (133) pour le calcul de paramètres de référence anémo-barométriques de l'aéronef des données anémo-barométriques consolidées,
o des moyens adaptés (134) pour la consolidation des paramètres de référence anémométrique calculés ;
de plus les moyens adaptés (112, 122,132) pour la consolidation des données comportent une pluralité de chaines de consolidation (201, 202, 203, 204), chacune des chaines de consolidation (201) étant associée à un indice et comportant :
- un moyen de calcul (Q1), relié à l'ensemble desdits moyens de mesures de la chaine de détermination à laquelle les moyens adaptés pour la consolidation des données appartiennent, ledit moyen de calcul comparant les mesures desdits moyens de mesures et permettant la détection des moyens de mesures défaillants,
- un moyen de stockage ordonné des résultats du calcul des moyens de calcul (Q2,Q3,Q4) des autres chaines de consolidation (202,203,204), classant les résultats par ordre croissant des indices associés aux chaines de consolidation (de i+1 à n, et de 1 à i-1) et supprimant les résultats des calcules des chaines de consolidation dont les moyens de mesures sont défaillants,
- un premier moyen de comparaison (C1), effectuant une comparaison entre le résultat d'un moyen de calcul (Q1) et le premier résultat du moyen de stockage ordonné des résultats de calcul des autres moyens de calcul (Q2,Q3,Q4) et permettant la détection des moyens de calculs défaillants.
- un moyen de stockage ordonné des résultats des comparateurs (C2,C3,C4) ordonnant les résultats des comparateurs par ordre décroissant des indices associés aux chaines de consolidation (de i-1 à 1, et de n à i+1) et supprimant les résultats des premières comparaisons des chaines de consolidations dont les moyens de calculs sont défaillants,
- un deuxième moyen de comparaison (S1), permettant de comparer le résultat d'un premier moyen de comparaison (C1) avec le résultat d'un des autres premier moyen de comparaison (C2,C3,C4), permettant la détection des premiers moyens de comparaison défaillants et permettant l'arrêt des chaines de consolidation dont les premiers moyens de comparaison sont défaillants.

2. Dispositif (100) pour la détermination d'informations de localisation, selon la revendication 1, comprenant en outre des moyens adaptés pour l'hybridation (140) des données inertielles et des signaux de radionavigation.

3. Dispositif (100), selon l'une des revendications précédentes, comprenant en outre des moyens adaptés pour l'hybridation (150) des données inertielles et des données anémo-barométriques.

4. Dispositif (100) selon l'une des revendications précédentes, dans lequel :
- les moyens (111) de mesure de données radionavigation comportent deux premiers sous moyens (MCR1, MCR2) et deux deuxièmes sous moyens différents (GBAS_GPS_1, GBAS_GPS_2) reliés chacun à deux antennes (AGN1, AGN2) fournissant des mesures synchrones sur les signaux de radionavigation (GNSS_Rd1, GNSS_Rd2, GPS_Rd1, GPS_Rd2) et des messages de navigations,
- les moyens adaptés (112) pour la consolidation des données de radionavigation mesurées comportent quatre troisièmes sous moyens (consolidate_GNSS_1, consolidate_GNSS_2, consolidate_GNSS_3, consolidate_GNSS_4) permettant la consolidation des mesures sur les signaux de radionavigation (GNSS_Rd1, GNSS_Rd2, GPS_Rd1, GPS_RD2),
- les moyens adaptés (113) pour le calcul de paramètres de position de l'aéronef et les moyens adaptés (114) pour la consolidation des paramètres de position calculés comportent deux quatrièmes sous moyens (fusion_POS3D1, fusion_POS3D2) permettant le calcul de positions de l'aéronef à partir de mesures de données inertielles consolidées (C_INS1, C_INS2) et mesure de signaux radionavigation consolidées (C_GNSS1, C_GNSS2),
ledit dispositif comporte également ;
- deux cinquièmes sous moyens (PAN_SW1, PAN_SW2) permettant l'activation, pour une approche donnée, d'un moyen d'approche sélectionné par le pilote, et permettant le calcul de déviations par rapport à une trajectoire d'approche de référence prédéterminée ; et
- deux sixièmes sous moyens (PAN_SW1_mon, PAN_SW2_mon) permettant la consolidation des calculs des déviations.

5. Dispositif (100) selon l'une des revendications précédentes, dans lequel :
- les moyens (111) de mesure de données radionavigation comportent trois septièmes sous moyens (MCR1, MCR2, MCR3) reliés chacun à trois antennes (AGN1, AGN2, AGN3) fournissant des mesures synchrones sur des signaux de radionavigation (GNSS_Rd1, GNSS_Rd2, GNSS_RD3) et des messages de navigations,
- les moyens adaptés (112) pour la consolidation des données de radionavigation mesurées comportent trois huitièmes sous moyens (consolidate_GNSS_1, consolidate_GNSS_2, consolidate_GNSS_3) pour la consolidation des mesures sur les signaux de radionavigation (GNSS_Rd1, GNSS_Rd2, GNSS_RD3)
- les moyens adaptés (113) pour le calcul de paramètres de position de l'aéronef et les moyens adaptés (114) pour la consolidation des paramètres de position calculés comportent deux neuvièmes sous moyens (fusion_POS3D1, fusion_POS3D2, fusion_POS3D3) pour le calcul de positions de l'aéronef à partir de mesures de données inertielles consolidées (C_INS1, C_INS2, C_INS3) et mesure de signaux radionavigation consolidées (C_GNSS1, C_GNSS2, C_GNSS3),
ledit dispositif comporte également ;
- trois dixièmes sous moyens (manage GLS_SW1, Manage_GLS_SW2 et Manage_GLS_SW3) pour l'activation, pour une approche donnée, d'un moyen d'approche sélectionné par le pilote, pour le calcul et la consolidation de déviations par rapport à une trajectoire d'approche de référence prédéterminée,

6. Dispositif (100) selon l'une des revendications précédentes, comportant ; un équipement de radio navigation (RAD-NAV) permettant l'émission/réception d'onde radio respectant l'ensemble des normes utilisées dans les applications de radio navigation

7. Dispositif (100) selon l'une des revendications précédentes, comportant : deux moyens de détection des mouvements et des accélérations, un récepteur dual de localisation par satellite, et des moyens de détermination de la localisation à partir des signaux reçus dudit récepteur dual.

8. Dispositif (100) selon l'une des revendications 1 à 7, comportant : trois moyens de détection des mouvements et des accélérations, un récepteur dual de localisation par satellite, et des moyens de détermination de la localisation à partir des signaux reçus dudit récepteur dual.

9. Dispositif (100) selon l'une des revendications précédentes, comportant au moins un premier récepteur comportant une antenne et des moyens de traitement analogiques et numériques des signaux provenant de l'antenne.

10. Dispositif (100) selon la revendication 10, dans lequel le premier récepteur est choisi parmi :
- un deuxième récepteur de signaux de localisation utilisant la norme VOR/DL comportant un sous moyen de réception d'un signal dans la bande de fréquence VHF, un sous moyen d'échantillonnage dudit signal reçu dans la bande de fréquence VHF et un sous module de détermination d'une distance entre une balise d'émission réception VOR et ledit récepteur de signaux à partir dudit signal échantillonné ;
- un troisième récepteur de signaux de localisation par satellite comportant des sous moyens (MCR1, MCR2, MCR3) reliés chacun à trois antennes (AGN1, AGN2, AGN3) fournissant des mesures synchrones sur des signaux de radionavigation (GNSS_Rd1, GNSS_Rd2, GNSS_RD3) et des messages de navigations,
- un quatrième récepteur de signaux de distance utilisant la norme DME comportant un sous dispositif fournissant des distances suivant la norme DME;
- un premier dispositif d'aide à l'atterrissage utilisant la norme ILS comportant une chaîne de traitement numérique des signaux reçus dans les bandes VHF et UHF et fournissant des écarts de localisation;
- un deuxième dispositif d'aide à l'atterrissage utilisant la norme ILS comportant une chaîne de traitement numérique des signaux reçus dans les bandes VHF et UHF et fournissant des écarts par rapport à la pente d'atterrissage.

11. Dispositif (100) selon l'une des revendications précédentes, dans lequel :
- les moyens (121) pour la mesure de données inertielles comportent au moins deux onzièmes sous-moyens (UMI-A1, UMI-A2) et au moins deux douzièmes sous-moyens différents (UMI-C1, UMI-C2) fournissant des mesures inertielles brutes d'accélérations et de vitesses angulaires (INS-X RD, Raw Data)
- les moyens adaptés (122) pour la consolidation des données inertielles mesurées comportent au moins trois treizièmes sous-moyens de consolidation (Consol-IRS1, Consol-IRS2, Consol-IRS3) desdites mesures inertielles brutes d'accélérations et de vitesses angulaires
- les moyens adaptés (123) pour le calcul de paramètres de référence inertiels comportent au moins deux quatorzièmes sous-moyens (PFV-A1, PFV-A2) traitant lesdites données mesurées par les au moins deux onzièmes sous-moyens et au moins deux quinzièmes sous-moyens (PFV-C1, PFV-C2) traitant lesdites données mesurées par les au moins deux douzièmes sous-moyens différentes (UMI-C1, UMI-C2)
- les moyens adaptés (124) pour la consolidation des paramètres de référence inertielle calculés, comportent au moins trois seizièmes sous-moyens de consolidation (Consol PFV1, Consol PFV2, Consol PFV3) desdites données provenant des au moins deux quatorzièmes sous-moyens (PFV-A1, PFV-A2) et des au moins deux quinzièmes sous-moyens (PFV-C1, PFV-C2)

12. Dispositif (100) selon l'une des revendications précédentes, dans lequel :
- les moyens (131) pour la mesure de données anémo-barométriques comportent des sous moyens de mesure de la pression totale (Pt) et/ou des sous moyens de mesure de la pression statique (Ps) et/ou des sous moyens de mesure de l'angle d'incidence air (AOA) et/ou des sous moyens de mesure de l'angle de dérapage air (SSA) et/ou des sous moyens de mesure de la vitesse air
- les moyens adaptés (132) pour la consolidation des données anémobarométriques mesurées comportent des dix-septième sous-moyens de calcul des paramètres anémobarométriques (ADC)
- les moyens adaptés (133) pour le calcul de paramètres de référence anémo-barométriques de l'aéronef des données anémo-barométriques consolidées comportent des dix-huitièmes sous-moyens de calcul des paramètres anémobarométriques (ADC)
- les moyens adaptés (134) pour la consolidation des paramètres de référence anémométrique calculés comprennent trois dix-neuvièmes sous-moyens (Consol AD) consolidant les données issues desdits dix-huitièmes et dix-neuvièmes sous moyens (ADC) et sont également adaptés pour utiliser des données provenant d'autres systèmes (Aiding systems)

## Patentansprüche

1. Vorrichtung (100) zum Ermitteln von Lokalisierungsinformationen, primären Trägheitsreferenzen und konsolidierten anemobarometuschen Daten für ein Luftfahrzeug, die Folgendes umfasst:
- eine Kette (110) zum Ermitteln von Lokalisierungsinformationen, die Folgendes umfasst:
o Mittel (111) zum Messen von Funknavigationsdaten;
o Mittel (112), ausgelegt zum Konsolidieren von gemessenen Funknavigationsdaten;
o Mittel (113), ausgelegt zum Berechnen von Positionsparametern des Luftfahrzeugs auf der Basis der konsolidierten Funknavigationsdaten;
o Mittel (114), ausgelegt zum Konsolidieren von berechneten Positionsparametern;
- eine Kette (120) zum Ermitteln von primären Trägheitsreferenzen, die Folgendes umfasst:
o Mittel (121) zum Messen von Trägheitsdaten, die die Bewegung des Luftfahrzeugs relativ zu einer terrestrischen Referenz anzeigen;
o Mittel (122), ausgelegt zum Konsolidieren von gemessenen Trägheitsdaten;
o Mittel (123), ausgelegt zum Berechnen von Trägheitsreferenzparametern des Luftfahrzeugs auf der Basis der konsolidierten Trägheitsdaten;
o Mittel (124), ausgelegt zum Konsolidieren von berechneten Trägheitsreferenzparametern;
- eine Kette (130) zum Ermitteln von anemobarometuschen Daten, die Folgendes umfasst:
o Mittel (131) zum Messen von anemobarometuschen Daten, die die Bewegung des Luftfahrzeugs relativ zur Luft anzeigen;
o Mittel (132), ausgelegt zum Konsolidieren von gemessenen anemobarometrischen Daten,
**dadurch gekennzeichnet, dass** die Vorrichtung Folgendes umfasst:
o Mittel (133), ausgelegt zum Berechnen von anemobarometuschen Referenzparametern des Luftfahrzeugs anhand der konsolidierten anemobarometuschen Daten;
o Mittel (134), ausgelegt zum Konsolidieren von berechneten anemometuschen Referenzparametern;
zusätzlich umfassen die Mittel (112, 122, 132), ausgelegt zum Konsolidieren von Daten mehrere Konsolidierungsketten (201, 202, 203, 204), wobei jede der Konsolidierungsketten (201) mit einem Index assoziiert ist und Folgendes umfasst:
- ein Rechenmittel (Q1), das mit allen Messmitteln der Ermittlungskette verbunden ist, zu denen die Mittel, ausgelegt zum Konsolidieren von Daten gehören, wobei das Rechenmittel die Messwerte der Messmittel vergleicht und es zulässt, dass fehlerhafte Messmittel erkannt werden;
- ein Mittel zum geordneten Speichern der Ergebnisse der Berechnung des Rechenmittels (Q2, Q3, Q4) der anderen Konsolidierungsketten (202, 203, 204), das der Ergebnisse in aufsteigender Reihenfolge der mit den Konsolidierungsketten (von i+1 bis n und von 1 to i-1) assoziierten Indexe sortiert und der Ergebnisse der Berechnungen der Konsolidierungsketten mit fehlerhaften Messmitteln unterdrückt;
- ein erstes Vergleichsmittel (C1) zum Vornehmen eines Vergleichs zwischen dem Ergebnis eines Rechenmittels (Q1) und dem ersten Ergebnis des Mittels zum geordneten Speichern der Rechenergebnisse der anderen Rechenmittel (Q2, Q3, Q4) und zum Zulassen, dass fehlerhafte Rechenmittel erkannt werden;
- ein Mittel zum geordneten Speichern der Ergebnisse der Komparatoren (C2, C3, C4), das der Ergebnisse der Komparatoren in absteigender Reihenfolge der mit den Konsolidierungsketten (von i-1 bis 1 und von n bis i+1) assoziierten Indexe ordnet und der Ergebnisse der ersten Vergleiche der Konsolidierungsketten mit fehlerhaften Rechenmitteln unterdrückt;
- ein zweites Vergleichsmittel (S1), das es zulässt, das Ergebnis eines ersten Vergleichsmittels (C1) mit dem Ergebnis von einem der anderen ersten Vergleichsmittel (C2, C3, C4) zu vergleichen, dabei zulassend, dass die ersten fehlerhaften Vergleichsmittel erkannt werden, und zulassend, dass die Konsolidierungsketten mit fehlerhaften ersten Vergleichsmitteln gestoppt werden.

2. Vorrichtung (100) zum Ermitteln von Lokalisierungsinformationen nach Anspruch 1, die ferner Mittel (140) zum Hybridisieren von Trägheitsdaten und Funknavigationssignalen umfasst.

3. Vorrichtung (100) nach einem der vorherigen Ansprüche, die ferner Mittel (150) zum Hybridisieren von Trägheitsdaten und anemobarometrischen Daten umfasst.

4. Vorrichtung (100) nach einem der vorherigen Ansprüche, wobei:
- die Mittel (111) zum Messen von Funknavigationsdaten zwei erste Submittel (MCR1, MCR2) und zwei unterschiedliche zweite Submittel (GBAS_GPS_1, GBAS_GPS_2) umfassen, die jeweils mit zwei Antennen (AGN1, AGN2) verbunden sind, die synchrone Messwerte auf den Funknavigationssignalen (GNSS_Rd1, GNSS_Rd2, GPS_Rd1, GPS_Rd2) und Navigationsnachrichten liefern;
- die Mittel (112), ausgelegt zum Konsolidieren von gemessenen Funknavigationsdaten vier dritte Submittel (consolidate_GNSS_1, consolidate_GNSS_2, consolidate_GNSS_3, consolidate_GNSS_4) umfassen, die es zulassen, Messwerte auf den Funknavigationssignalen (GNSS_Rd1, GNSS_Rd2, GPS_Rd1, GPS_Rd2) zu konsolidieren;
- die Mittel (113), ausgelegt zum Berechnen von Positionsparametern des Luftfahrzeugs und die Mittel (114), ausgelegt zum Konsolidieren von berechneten Positionsparametern zwei vierte Submittel (fusion_POS3D1, fusion_POS3D2) umfassen, die es zulassen, die Positionen des Luftfahrzeugs auf der Basis von konsolidierten Trägheitsdatenmesswerten (C_INS1, C_INS2) und konsolidierten Funknavigationssignalmesswerten (C_GNSS1, C_GNSS2) zu berechnen;
wobei die Vorrichtung ferner Folgendes umfasst:
- zwei fünfte Submittel (PAN_SW1, PAN_SW2), die die Aktivierung, für einen gegebenen Anflug, eines vom Piloten gewählten Anflugmittels zulassen, die es zulassen, Abweichungen relativ zu einer vorbestimmten Referenzanflugbahn zu berechnen; und
- zwei sechste Submittel (PAN_SW1_mon, PAN_SW2_mon), die es zulassen, die Berechnungen der Abweichungen zu konsolidieren.

5. Vorrichtung (100) nach einem der vorherigen Ansprüche, wobei:
- die Mittel (111) zum Messen von Funknavigationsdaten drei siebte Submittel (MCR1, MCR2, MCR3) umfassen, die jeweils mit drei Antennen (AGN1, AGN2, AGN3) verbunden sind, die synchrone Messwerte auf Funknavigationssignalen (GNSS_Rd1, GNSS_Rd2, GNSS_Rd3) und Navigationsnachrichten liefern;
- die Mittel (112), ausgelegt zum Konsolidieren von gemessenen Funknavigationsdaten drei achte Submittel (consolidate_GNSS_1, consolidate_GNSS_2, consolidate_GNSS_3) zum Konsolidieren von Messwerten auf den Funknavigationssignalen (GNSS_Rd1, GNSS_Rd2, GNSS_Rd3) umfassen;
- die Mittel (113), ausgelegt zum Berechnen von Positionsparametern des Luftfahrzeugs und die Mittel (114), ausgelegt zum Konsolidieren von berechneten Positionsparametern zwei neunte Submittel (fusion_POS3D1, fusion_POS3D2, fusion_POS3D3) zum Berechnen von Positionen des Luftfahrzeugs auf der Basis von konsolidierten Trägheitsdatenmesswerten (C_INS1, C_INS2, C_INS3) und konsolidierten Funknavigationssignalmesswerten (C_GNSS1, C_GNSS2, C_GNSS3) umfassen;
wobei die Vorrichtung ferner Folgendes umfasst:
- drei zehnte Submittel (Manage GLS_SW1, Manage GLS_SW2 and Manage GLS_SW3) zum Aktivieren, für einen gegebenen Anflug, eines vom Piloten gewählten Anflugmittels, zum Berechnen und Konsolidieren von Abweichungen relativ zu einer vorbestimmten Referenzanflugbahn.

6. Vorrichtung (100) nach einem der vorherigen Ansprüche, die ein Funknavigationsgerät (RAD-NAV) umfasst, das das Senden/Empfangen von Funkwellen zulässt, die alle in Funknavigationsanwendungen benutzten Normen erfüllen.

7. Vorrichtung (100) nach einem der vorherigen Ansprüche, die zwei Mittel zum Erkennen von Bewegungen und Beschleunigungen, einen dualen Satellitenlokalisierungsempfänger und Mittel zum Ermitteln der Lokalisierung auf der Basis der von dem dualen Empfänger empfangenen Signale umfasst.

8. Vorrichtung (100) nach einem der Ansprüche 1 bis 7, die drei Mittel zum Erkennen von Bewegungen und Beschleunigungen, einen dualen Satellitenlokalisierungsempfänger und Mittel zum Ermitteln der Lokalisierung auf der Basis der von dem dualen Empfänger empfangenen Signale umfasst.

9. Vorrichtung (100) nach einem der vorherigen Ansprüche, die wenigstens einen ersten Empfänger umfasst, der eine Antenne und Mittel zum analogen und digitalen Verarbeiten von von der Antenne kommenden Signalen umfasst.

10. Vorrichtung (100) nach Anspruch 10, wobei der erste Empfänger ausgewählt ist aus:
- einem zweiten Lokalisierungssignalempfänger unter Verwendung der VOR/DL-Norm, umfassend ein Submittel zum Empfangen eines Signals im VHF-Frequenzband, ein Submittel zum Abtasten des im VHF-Frequenzband empfangenen Signals und ein Submodul zum Ermitteln einer Distanz zwischen einem VOR-Transceiver-Beacon und dem Signalempfänger auf der Basis des abgetasteten Signals;
- einem dutten Satellitenlokalisierungssignalempfänger, umfassend Submittel (MCR1, MCR2, MCR3), die jeweils mit drei Antennen (AGN1, AGN2, AGN3) verbunden sind, die synchrone Messwerte auf Funknavigationssignalen (GNSS_Rd1, GNSS_Rd2, GNSS_Rd3) und Navigationsnachrichten liefern;
- einem vierten Fernsignalempfänger unter Verwendung der DME-Norm, umfassend eine Subvorrichtung, die Distanzen gemäß der DME-Norm liefert;
- einer ersten Landungsunterstützungsvorrichtung unter Verwendung der ILS-Norm, umfassend eine digitale Verarbeitungskette von im VHF- und UHF-Band empfangenen Signalen und zum Liefern von Lokalisierungsabweichungen;
- einer zweiten Landungsunterstützungsvorrichtung unter Verwendung der ILS-Norm, umfassend eine digitale Verarbeitungskette von im VHF- und UHF-Band empfangenen Signalen und zum Liefern von Abweichungen relativ zum Landungsgradienten.

11. Vorrichtung (100) nach einem der vorherigen Ansprüche, wobei:
- die Mittel (121) zum Messen von Trägheitsdaten wenigstens zwei elfte Submittel (UMI-A1, UMI-A2) und wenigstens zwei unterschiedliche zwölfte Submittel (UMI-C1, UMI-C2) umfassen, die rohe Trägheitsmesswerte für Beschleunigungen und Winkelgeschwindigkeiten (INS X RD, Rohdaten) liefern;
- die Mittel (122), ausgelegt zum Konsolidieren von gemessenen Trägheitsdaten wenigstens drei dreizehnte Submittel (Consol-IRS1, Consol-IRS2, Consol-IRS3) zum Konsolidieren der rohen Trägheitsmesswerte für Beschleunigungen und Winkelgeschwindigkeiten umfassen;
- die Mittel (123), ausgelegt zum Berechnen von Trägheitsreferenzparametern wenigstens zwei vierzehnte Submittel (PFV-A1, PFV-A2) zum Verarbeiten der von den wenigstens zwei elften Submitteln gemessenen Daten und wenigstens zwei fünfzehnte Submittel (PFV-C1, PFV-C2) zum Verarbeiten der von den wenigstens zwei unterschiedlichen zwölften Submitteln (UMI-C1, UMI-C2) gemessenen Daten umfassen;
- die Mittel (124), ausgelegt zum Konsolidieren von berechneten Trägheitsreferenzparametern wenigstens drei sechzehnte Submittel (Consol PFV1, Consol PFV2, Consol PFV3) zum Konsolidieren der von den wenigstens zwei vierzehnten Submitteln (PFV-A1, PFV-A2) und den wenigstens zwei fünfzehnten Submitteln (PFV-C1, PFV-C2) kommenden Daten umfassen.

12. Vorrichtung (100) nach einem der vorherigen Ansprüche, wobei:
- die Mittel (131) zum Messen von anemobarometrischen Daten Submittel zum Messen des Gesamtdrucks (Pt) und/oder Submittel zum Messen des statischen Drucks (Ps) und/oder Submittel zum Messen des Luftanströmwinkels (AOA) und/oder Submittel zum Messen des Luftschiebewinkels (SSA) und/oder Submittel zum Messen der Luftgeschwindigkeit umfassen;
- die Mittel (132), ausgelegt zum Konsolidieren von gemessenen anemobarometrischen Daten siebzehnte Submittel (ADC) zum Berechnen von anemobarometrischen Parametern umfassen;
- die Mittel (133), ausgelegt zum Berechnen von anemobarometrischen Referenzparametern des Luftfahrzeugs anhand der konsolidierten anemobarometrischen Daten achtzehnte Submittel (ADC) zum Berechnen von anemobarometrischen Parametern umfassen;
- die Mittel (134), ausgelegt zum Konsolidieren von berechneten anemobarometrischen Referenzparametern drei neunzehnte Submittel (Consol AD) zum Konsolidieren der von den achtzehnten und neunzehnten Submitteln (ADC) kommenden Daten umfassen und auch zum Benutzen von von anderen Systemen (Hilfssystemen) kommenden Daten ausgelegt sein.

## Claims

1. A device (100) for determining localisation information, inertial primary references and consolidated anemo-barometric data for an aircraft comprising:
- a chain (110) for determining localisation information comprising:
o means (111) for measuring radio navigation data;
o means (112) adapted for consolidating measured radio navigation data;
o means (113) adapted for computing position parameters of said aircraft on the basis of the consolidated radio navigation data;
o means (114) adapted for consolidating computed position parameters;
- a chain (120) for determining primary inertial references comprising:
o means (121) for measuring inertial data indicating the movement of said aircraft relative to a ground reference;
o means (122) adapted for consolidating measured inertial data;
o means (123) adapted for computing inertial reference parameters of said aircraft on the basis of the consolidated inertial data;
o means (124) adapted for consolidating computed inertial reference parameters;
- a chain (130) for determining anemo-barometric data comprising:
o means (131) for measuring anemo-barometric data indicating the movement of said aircraft relative to the air;
o means (132) adapted for consolidating measured anemo-barometric data,
**characterised in that** said device comprises:
o means (133) adapted for computing anemo-barometric reference parameters of said aircraft from the consolidated anemo-barometric data;
o means (134) adapted for consolidating computed anemo-barometric reference parameters;
in addition, said means (112, 122, 132) adapted for consolidating data comprise a plurality of consolidation chains (201, 202, 203, 204), with each of said consolidation chains (201) being associated with an index and comprising:
- a computation means (Q1) connected to all of said measurement means of said determination chain, to which said means adapted for consolidating data belong, said computation means comparing the measurements of said measurement means and allowing faulty measurement means to be detected;
- a means for storing the results of the computation of the computation means (Q2, Q3, Q4) of the other consolidation chains (202, 203, 204) in an ordered manner, sorting the results in increasing order of the indices associated with said consolidation chains (from i+1 to n and from 1 to i-1) and suppressing the results of the computations of the consolidation chains with faulty measurement means;
- a first comparison means (C1) making a comparison between the result of a computation means (Q1) and the first result from the means for storing the computation results of the other computation means (Q2, Q3, Q4) in an ordered manner and allowing faulty computation means to be detected;
- a means for storing the results of the comparators (C2, C3, C4) in an ordered manner, ordering the results of the comparators in decreasing order of the indices associated with said consolidation chains (from i-1 to 1 and from n to i+1) and suppressing the results of the first comparisons of the consolidation chains with faulty computation means;
- a second comparison means (S1) allowing the result of a first comparison means (C1) to be compared with the result of one of the other first comparison means (C2, C3, C4), allowing the first faulty comparison means to be detected and allowing the consolidation chains with faulty first comparison means to be stopped.

2. The device (100) for determining localisation information according to claim 1, further comprising means (140) adapted for hybridising inertial data and radio navigation signals.

3. The device (100) according to any one of the preceding claims, further comprising means (150) adapted for hybridising inertial data and anemo-barometric data.

4. The device (100) according to any one of the preceding claims, wherein:
- said means (111) for measuring radio navigation data comprise two first sub-means (MCR1, MCR2) and two different second sub-means (GBAS_GPS_1, GBAS_GPS_2), each connected to two antennae (AGN1, AGN2) supplying synchronous measurements on radio navigation signals (GNSS_Rd1, GNSS_Rd2, GPS_Rd1, GPS_Rd2) and navigation messages;
- said means (112) adapted for consolidating measured radio navigation data comprise four third sub-means (consolidate_GNSS_1, consolidate_GNSS_2, consolidate_GNSS_3, consolidate_GNSS_4) allowing the measurements on radio navigation signals (GNSS_Rd1, GNSS_Rd2, GPS_Rd1, GPS_Rd2) to be consolidated;
- said means (113) for computing position parameters of said aircraft and said means (114) adapted for consolidating computed position parameters comprise two fourth sub-means (fusion_POS3D1, fusion_POS3D2) allowing positions of said aircraft to be computed on the basis of consolidated inertial data measurements (C_INS1, C_INS2) and consolidated radio navigation signal measurements (C_GNSS1, C_GNSS2);
said device further comprises:
- two fifth sub-means (PAN_SW1, PAN_SW2) allowing the activation, for a given approach, of an approach means selected by the pilot, and allowing deviations to be computed relative to a predetermined reference approach path; and
- two sixth sub-means (PAN_SW1_mon, PAN_SW2_mon) allowing the computations of the deviations to be consolidated.

5. The device (100) according to any one of the preceding claims, wherein:
- said means (111) for measuring radio navigation data comprise three seventh sub-means (MCR1, MCR2, MCR3), each connected to three antennae (AGN1, AGN2, AGN3) supplying synchronous measurements on radio navigation signals (GNSS_Rd1, GNSS_Rd2, GNSS_Rd3) and navigation messages;
- said means (112) adapted for consolidating measured radio navigation data comprise three eighth sub-means (consolidate_GNSS_1, consolidate_GNSS_2, consolidate_GNSS_3) for consolidating measurements on the radio navigation signals (GNSS_Rd1, GNSS_Rd2, GNSS_Rd3);
- said means (113) adapted for computing position parameters of said aircraft and said means (114) adapted for consolidating computed position parameters comprise two ninth sub-means (fusion_POS3D1, fusion_POS3D2, fusion_POS3D3) for computing positions of the aircraft on the basis of consolidated inertial data measurements (C_INS1, C_INS2, C_INS3) and consolidated radio navigation signal measurements (C_GNSS1, C_GNSS2, C_GNSS3);
said device further comprises:
- three tenth sub-means (Manage GLS_SW1, Manage GLS_SW2 and Manage GLS_SW3) for activating, for a given approach, an approach means selected by the pilot, for computing and for consolidating deviations relative to a predetermined reference approach path.

6. The device (100) according to any one of the preceding claims, comprising an item of radio navigation equipment (RAD-NAV) allowing radio waves to be transmitted/received that comply with all of the standards used in radio navigation applications.

7. The device (100) according to any one of the preceding claims, comprising two means for detecting movements and accelerations, one dual satellite localisation receiver and means for determining the localisation on the basis of the signals received from said dual receiver.

8. The device (100) according to any one of claims 1 to 7, comprising three means for detecting movements and accelerations, one dual satellite localisation receiver and means for determining the localisation on the basis of the signals received from said dual receiver.

9. The device (100) according to any one of the preceding claims, comprising at least one first receiver comprising an antenna and means for the analogue and digital processing of signals originating from the antenna.

10. The device (100) according to claim 10, wherein said first receiver is selected from:
- a second localisation signal receiver using the VOR/DL standard, comprising a sub-means for receiving a signal in the VHF frequency band, a sub-means for sampling said signal received in the VHF frequency band and a sub-module for determining a distance between a VOR transceiver beacon and said signal receiver on the basis of said sampled signal;
- a third satellite localisation signal receiver comprising sub-means (MCR1, MCR2, MCR3), each connected to three antennae (AGN1, AGN2, AGN3) supplying synchronous measurements on radio navigation signals (GNSS_Rd1, GNSS_Rd2, GNSS_Rd3) and navigation messages;
- a fourth remote signal receiver using the DME standard, comprising a sub-device supplying distances according to the DME standard;
- a first landing assistance device using the ILS standard, comprising a chain for digitally processing signals received in the VHF and UHF bands and supplying localisation deviations;
- a second landing assistance device using the ILS standard, comprising a chain for digitally processing signals received in the VHF and UHF bands and supplying deviations relative to the landing gradient.

11. The device (100) according to any one of the preceding claims, wherein:
- said means (121) for measuring inertial data comprise at least two eleventh sub-means (UMI-A1, UMI-A2) and at least two different twelfth sub-means (UMI-C1, UMI-C2) providing raw inertial measurements of accelerations and angular speeds (INS X RD, Raw Data);
- said means (122) adapted for consolidating measured inertial data comprise at least three thirteenth sub-means (Consol-IRS1, Consol-IRS2, Consol-IRS3) for consolidating said raw inertial measurements of accelerations and angular speeds;
- said means (123) adapted for computing inertial reference parameters comprise at least two fourteenth sub-means (PFV-A1, PFV-A2) processing said data measured by said at least two eleventh sub-means and at least two fifteenth sub-means (PFV-C1, PFV-C2) processing said data measured by said at least two different twelfth sub-means (UMI-C1, UMI-C2);
- said means (124) adapted for consolidating computed inertial reference parameters comprise at least three sixteenth sub-means (Consol PFV1, Consol PFV2, Consol PFV3) for consolidating said data originating from said at least two fourteenth sub-means (PFV-A1, PFV-A2) and said at least two fifteenth sub-means (PFV-C1, PFV-C2).

12. The device (100) according to any one of the preceding claims, wherein:
- said means (131) for measuring anemo-barometric data comprise sub-means for measuring the total pressure (Pt) and/or sub-means for measuring the static pressure (Ps) and/or sub-means for measuring the air angle of attack (AOA) and/or sub-means for measuring the air sideslip angle (SSA) and/or sub-means for measuring the airspeed;
- said means (132) adapted for consolidating measured anemo-barometric data comprise seventeenth sub-means (ADC) for computing anemo-barometric parameters;
- said means (133) adapted for computing anemo-barometric reference parameters of said aircraft from the consolidated anemo-barometric data comprise eighteenth sub-means (ADC) for computing anemo-barometric parameters;
- said means (134) adapted for consolidating computed anemo-barometric reference parameters comprise three nineteenth sub-means (Consol AD) consolidating the data coming from said eighteenth and nineteenth sub-means (ADC) and are also adapted for using data originating from other systems (Aiding systems).
